(19) Europäisches Patentamt
European Patent Office
Office européen des brevets

(11) **EP 3 049 758 B1**

(12) **EUROPÄISCHE PATENTSCHRIFT**

(45) Veröffentlichungstag und Bekanntmachung des Hinweises auf die Patenterteilung:
**23.08.2017 Patentblatt 2017/34**

(21) Anmeldenummer: **14772340.7**

(22) Anmeldetag: **24.09.2014**

(51) Int Cl.:
*G01B 21/04* (2006.01)    *G05B 19/401* (2006.01)

(86) Internationale Anmeldenummer:
**PCT/EP2014/070383**

(87) Internationale Veröffentlichungsnummer:
**WO 2015/044210 (02.04.2015 Gazette 2015/13)**

(54) **REDUZIERUNG VON FEHLERN EINER DREHVORRICHTUNG, DIE BEI DER BESTIMMUNG VON KOORDINATEN EINES WERKSTÜCKS ODER BEI DER BEARBEITUNG EINES WERKSTÜCKS VERWENDET WIRD**

REDUCTION OF ERRORS OF A ROTATING DEVICE USED DURING THE DETERMINATION OF CO-ORDINATES OF A WORKPIECE OR DURING THE MACHINING OF A WORKPIECE

RÉDUCTION D'ERREURS D'UN DISPOSITIF DE ROTATION QUI EST UTILISÉE LORS DE LA DÉTERMINATION DE COORDONNÉES D'UNE PIÈCE OU LORS DE L'USINAGE D'UNE PIÈCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.09.2013 DE 102013219389**

(43) Veröffentlichungstag der Anmeldung:
**03.08.2016 Patentblatt 2016/31**

(73) Patentinhaber: **Carl Zeiss Industrielle Messtechnik GmbH**
**73447 Oberkochen (DE)**

(72) Erfinder:
• **SAGEMÜLLER, Rainer**
**73434 Fachsenfeld (DE)**
• **SEITZ, Dominik**
**73525 Schwäbisch Gmünd (DE)**
• **HELD, Tobias**
**86720 Nördlingen (DE)**

(74) Vertreter: **Patentanwälte Bressel und Partner mbB**
**Potsdamer Platz 10**
**10785 Berlin (DE)**

(56) Entgegenhaltungen:
• **MARSH E R ET AL: "A comparison of reversal and multiprobe error separation", PRECISION ENGINEERING, ELSEVIER, AMSTERDAM, NL, Bd. 34, Nr. 1, 25. März 2009 (2009-03-25), Seiten 85-91, XP026708756, ISSN: 0141-6359, DOI: 10.1016/J.PRECISIONENG.2009.03.001 [gefunden am 2009-03-25]**
• **KNAPP B ET AL: "Nanometer-level axis of rotation metrology for a high-precision macromolecular X-ray diffractometer", JOURNAL OF PHYSICS: CONFERENCE SERIES, INSTITUTE OF PHYSICS PUBLISHING, BRISTOL, GB, Bd. 425, Nr. 1, 22. März 2013 (2013-03-22), Seite 12012, XP020243017, ISSN: 1742-6596, DOI: 10.1088/1742-6596/425/1/012012**
• **XUE ZI YEXIAOYOU: "Cylindricity Compound Errors Reversal Separation Method", SPIE, PO BOX 10 BELLINGHAM WA 98227-0010 USA, 635723, 13. November 2006 (2006-11-13), XP040231158,**

**Beschreibung**

Die Erfindung betrifft ein Verfahren zum Reduzieren von Fehlern einer Drehvorrichtung, wobei die Fehler bei der Bestimmung von Koordinaten eines Werkstücks auftreten bzw. wirksam werden. Die Drehvorrichtung ermöglicht eine Drehbewegung des Werkstücks um eine Drehachse der Drehvorrichtung während der Bestimmung der Koordinaten. Die Erfindung betrifft ferner eine Anordnung, mit der das Verfahren ausführbar ist. Dabei wird davon ausgegangen, dass die Fehler der Drehvorrichtung zumindest zu einem Teil reproduzierbar sind.

Es ist bekannt, Werkstücke zum Zweck der Messung ihrer Koordinaten oder zum Zweck der Bearbeitung des Werkstücks drehbar zu lagern. Z.B. werden auf dem Gebiet der Koordinatenmesstechnik Werkstücke auf drehbaren Tischen (so genannte Drehtische) angeordnet. Auf diese Weise kann das Werkstück in verschiedene Arbeitsausrichtungen gebracht werden, in denen das Koordinatenmessgerät (kurz: KMG) arbeitet, d.h. Koordinaten des Werkstücks misst. Insbesondere können die Koordinaten des Werkstücks kontinuierlich (z. B. scannend) gemessen werden, während die Drehvorrichtung das Werkstück um ihre Drehachse dreht. Mit der Drehvorrichtung kann die benötigte Messzeit/Bearbeitungszeit verkürzt werden, die Genauigkeit der Messung/Bearbeitung gesteigert werden und/oder eine einfachere Koordinaten-Messeinrichtung bzw. ein einfacheres Bearbeitungswerkzeug verwendet werden.

Entsprechendes gilt für die Bearbeitung eines Werkstücks durch eine Werkzeugmaschine. Das Werkstück kann in verschiedene Arbeitsausrichtungen gebracht werden, um das Werkzeug zu bearbeiten. Insbesondere kann das Werkstück kontinuierlich gedreht werden, während es bearbeitet wird.

Die Arbeitsausrichtung kann insbesondere durch eine Richtung definiert sein, die sich senkrecht zu der Drehachse und durch einen Punkt auf der Oberfläche des Werkstücks erstreckt, an dem das Werkstück abgetastet wird oder an dem das Werkstück bearbeitet wird. Die beim taktilen Antasten des Werkstücks mit einem Taster oder beim Bearbeiten des Werkstücks auf das Werkstück wirkende Kraft kann daher insbesondere senkrecht zu der Drehachse in Richtung der Arbeitsausrichtung wirken.

Auf dem Gebiet der Koordinatenmesstechnik ist es häufig zur Formprüfung eines Werkstücks vorteilhaft, das Werkstück mit einem Taster abzutasten, der eine nahezu konstante Arbeitsausrichtung und Arbeitsposition relativ zu der Drehvorrichtung hat, während die Drehvorrichtung das Werkstück dreht. Die Arbeitsposition und Arbeitsausrichtung sind nicht völlig konstant, da das Werkstück in der Regel nicht exakt rotationssymmetrisch zu der Drehachse der Drehvorrichtung angeordnet ist und/oder nicht oder nicht exakt rotationssymmetrisch geformt ist. Z.B. kann ein Taster eines Koordinatenmessgeräts, der die Oberfläche des Werkstücks taktil antastet, von dem Koordinatenmessgerät in einer festen Position und bei einer festen Ausrichtung gehalten werden, wobei der Taster abhängig von der zu messenden Form des Werkstücks unterschiedlich weit relativ zu einer Halterung des Tasters ausgelenkt wird. Durch die nahezu konstante Arbeitsausrichtung und Arbeitsposition können Fehler der Koordinatenmessung aufgrund von positionsabhängigen und ausrichtungsabhängigen Fehlern des Koordinatenmessgeräts minimiert werden. Die Fehler der Drehvorrichtung bestimmen in diesem Fall das Messergebnis maßgeblich. Auch die Geschwindigkeit der Vermessung des Werkstücks kann in vielen Fällen auf diese Weise gesteigert werden.

Fehler der Drehvorrichtung werden durch Abweichung einer realen Drehbewegung von einer idealen Drehbewegung verursacht. Eric Marsh beschreibt in "Precision Spindle Metrology", ISBN 978-1-932078-77-0, insbesondere Kapitel 2, Konzepte zur Beschreibung von Bewegungsfehlern einer Präzisionsspindel. Das von Marsh beschriebene Fehlerseparationsverfahren geht von einem Messaufbau aus, bei dem drei Sensoren gleichzeitig die Bewegungen eines rotierenden Kalibrierkörpers erfassen. Die drei Sensoren werden von einer gemeinsamen Halterung gehalten. Die gleichzeitig aufgezeichneten Messsignale der drei Sensoren erlauben danach eine rechnerische Trennung (Separation) der Formfehler des Kalibrierkörpers (einer Prüfkugel) und der Bewegungsfehler der Spindel.

Die Größe des Fehlers der Drehvorrichtung hängt in vielen Fällen von den eingeleiteten Kräften und Momenten ab, die durch die Masse des an der Drehvorrichtung angeordneten Werkstücks und/oder durch Kräfte einer Koordinaten-Messeinrichtung oder eines Bearbeitungswerkzeuges auf das Werkstück ausgeübt werden. Bei der Drehbewegung der Drehvorrichtung können auch dynamische Effekte auftreten. Am Ort der Messung eines Werkstücks überlagern sich diese Fehler mit den zu messenden Fehlern des Werkstücks, sodass die Fehler des Werkstücks nicht exakt gemessen werden können. Bei der Bearbeitung eines Werkstücks führen die Fehler der Drehvorrichtung zu Fehlern des Werkstücks im Vergleich zu einer Vorgabe. Insbesondere bei großen Werkstücken können, aufgrund der geometrischen Verstärkung der Fehler der Drehvorrichtung mit zunehmendem Abstand von der Drehvorrichtung, besonders große Messfehler bzw. Bearbeitungsfehler entstehen.

Zur Reduzierung der Fehler der Drehvorrichtung kann die Drehvorrichtung so konstruiert werden, dass der Fehler Vorgaben erfüllt. Insbesondere können Öl- oder Luftlagerungen zur Lagerung der drehbeweglichen Teile der Drehvorrichtung eingesetzt werden und bei motorisch angetriebenen Drehvorrichtungen Direktantriebe eingesetzt werden. Je kleiner der Fehler der Drehvorrichtung sein soll, desto höher ist der konstruktive Aufwand. Der Aufwand für die Herstellung derartiger Drehvorrichtungen ist hoch und in vielen Fällen weisen solche Drehvorrichtungen große Abmessungen auf, sind mechanisch komplex und empfindlich gegen äußere Einflüsse, wie Verschmutzung. Bei Anordnungen zur Koordinatenmessung oder Bearbeitung von Werkstücken, die Wälzlagerungen ohne Bedarf für eine Versorgung mit Luft oder Öl aufweisen, stellt eine Öl- oder Luftlagerung der Drehvorrichtung einen erheblichen Zusatzaufwand dar. Die Erfindung betrifft insbesondere Koordinatenmessgeräte mit einer solchen Wälzlagerung.

Die konstruktive Reduzierung von Fehlern der Drehvorrichtung führt auch zu einer Beschränkung der Einsatzmöglichkeiten der Drehvorrichtung, da die hohe mechanische Genauigkeit der Drehbewegung nicht alle gewünschten Einsatzbereiche zulässt. Z.B. können Drehvorrichtungen mit Luftlagerung nur mit begrenzten Kippmomenten belastet werden und daher nur Werkstücke mit nicht zu großer Masse drehen.

Alternativ oder zusätzlich können Fehler der Drehvorrichtung mit einem Koordinatenmessgerät gemessen werden, wobei ein Kalibrierkörper oder eine Anordnung von Kalibrierkörpern an dem drehbaren Teil der Drehvorrichtung angeordnet wird (z.B. auf den Drehtisch gestellt wird) und vermessen wird. Die Vermessung der Fehler der Drehvorrichtung bezüglich aller sechs möglichen Freiheitsgrade der Bewegung ist jedoch zeitaufwendig. Bei hoher geforderter Genauigkeit muss die Kalibrierung wiederholt werden, beispielsweise wenn die Drehvorrichtung Temperaturschwankungen ausgesetzt ist. Entsprechendes gilt für eine Drehvorrichtung, die ausgestaltet ist, Werkstücke im Bearbeitungsbereich einer Werkzeugmaschine drehbar zu halten. Der Aufwand für eine Kalibrierung ist in diesem Fall im Vergleich zur Koordinatenmesstechnik meist noch größer, da auf dem Gebiet der Koordinatenmesstechnik meist das Koordinatenmessgerät für die Kalibrierung eingesetzt werden kann, das auch später die Vermessung von Werkstücken durchführt.

Die Veröffentlichung von E. R. Marsh et al. "A comparison of reversal and multiprobe error separation", Amsterdam, NL, Bd. 34, Nr. 1, 25. März 2009, Seiten 85-91, ISSN: 0141-6359 beschreibt die Anwendung von zwei Verfahren zum Trennen des Bewegungsfehlers einer Werkzeugspindel von einem Rundheitsfehler der Spindel. Gemäß dem Mehr-Sensor Verfahren können gleichzeitig Messungen von drei oder manchmal mehr Auslenkungssensoren verwendet werden, um die Trennung vorzunehmen. Alle Sensoren messen denselben Verlauf von Auslenkungen. In der Veröffentlichung wird auch eine Variante des Mehr-Sensor Verfahrens angegeben, bei der nur eine Messeinrichtung verwendet wird, welche jedoch sukzessive an mehreren Winkelpositionen positioniert wird.

Die Veröffentlichung von B. Knapp et al. "Nanometer-level axis of rotation metrology for a high-precision macromolecular X-ray diffractometer", Journal of Physics: Converence Series, Institute of Physics Publishing, Bristol, GB, Bd. 425, Nr. 1, 22. März 2013, Seite 12012, ISSN: 1742-6596 beschreibt einen Messaufbau zur Messung des Drehbewegungsfehlers einer Maschinenspindel mit Messsensoren zur Messung von fünf Freiheitsgraden der Bewegung bzw. der Abweichung von einer idealen Drehbewegung. Auf eine Modifikation eines Mehr-Sensor Fehlerseparationsverfahrens nach Marsh wird hingewiesen.

Es ist eine Aufgabe der vorliegenden Erfindung, ein Verfahren zum Reduzieren von Fehlern einer Drehvorrichtung bei der Bestimmung von Koordinaten eines Werkstücks anzugeben, das geringen messtechnischen und konstruktiven Aufwand erfordert, um den Fehler der Drehvorrichtung gering zu halten. Insbesondere sollen die oben bereits beschriebenen Verfahrensweisen der Vermessung eines Werkstücks bei geringem Aufwand möglich sein. Ferner ist es eine Aufgabe der vorliegenden Erfindung, eine Anordnung zur Durchführung des Verfahrens anzugeben.
Die beigefügten Patentansprüche definieren den Schutzumfang.

Die Erfindung geht von der Erkenntnis aus, dass Drehvorrichtungen für Koordinatenmessgeräte und Werkzeugmaschinen in vielen Fällen verschiedene Fehlerquellen aufweisen, die zu verschiedenen Fehlerbeiträgen zum Gesamtfehler der Drehvorrichtung führen. Insbesondere sind diese verschiedenen Fehlerbeiträge translatorische Fehler, d.h. die Drehachse bewegt sich in geradliniger Richtung während der Drehbewegung, und rotatorische Fehler, d.h. die Drehachse ist abhängig von der Drehstellung der relativ zueinander drehbeweglichen Teile der Drehvorrichtung unterschiedlich gegen die ideale, nicht veränderliche Drehachse geneigt und/oder verläuft in unterschiedlicher Weise windschief zu der idealen Drehachse. Die unterschiedlichen Fehlerbeiträge kompensieren sich oder verstärken sich, je nach Arbeitsposition und Arbeitsausrichtung der Koordinaten-Messeinrichtung oder des Bearbeitungswerkzeuges der Werkzeugmaschine relativ zur Drehvorrichtung.

Außerdem beruht die Erfindung auf der Erkenntnis, dass sich einzelne Fehlerquellen bei bestimmten Arbeitspositionen und Arbeitsausrichtungen nicht oder geringer als bei anderen Arbeitsausrichtungen und Arbeitspositionen auf den Fehler der Messung oder Bearbeitung des Werkstücks auswirken. Z.B. kann die tatsächliche Drehachse der Drehvorrichtung um eine Koordinatenachse kippen, die senkrecht zu der idealen Drehachse verläuft. Dabei kann sich der Kippwinkel (der Winkel zwischen der realen und der idealen Drehachse) während einer Drehbewegung der Drehvorrichtung ändern. Bei einer Messung oder Bearbeitung eines Werkstücks in einer Arbeitsausrichtung, die in Richtung der genannten Koordinatenachse verläuft, verändert sich aufgrund dieser Fehlerquelle die Position eines von der Drehvorrichtung gedrehten Werkstücks nicht. Dagegen verändert sich aber die Position des Werkstücks aufgrund dieser Fehlerquelle (d.h. aufgrund der Kippbewegung) in Richtungen, die senkrecht zu der idealen Drehachse und senkrecht zu der genannten Koordinatenachse verlaufen und die die Koordinatenachse nicht schneiden. Je nach axialem Abstand von dem Zentrum der Kippbewegung (der axiale Abstand wird in Richtung der idealen Drehachse bestimmt) wirkt sich der Fehler dieser Fehlerquelle stärker oder schwächer aus.

Es wird vorgeschlagen, ein Werkstück an der Drehvorrichtung anzuordnen, sodass ein Teil der Drehvorrichtung das Werkstück dreht, wenn die Drehvorrichtung betrieben wird. Ferner wird eine Koordinaten-Messeinrichtung verwendet, die Koordinaten einer Oberfläche des Werkstücks misst. Die Koordinaten-Messeinrichtung wird nacheinander an verschiedenen Positionen bezüglich der Drehachse positioniert und jeweils, während die Koordinaten-Messeinrichtung in einer dieser Positionen der Drehachse ist, wird das Werkstück von der Drehvorrichtung gedreht. Während der Drehung misst die Koordinaten-Messeinrichtung jeweils einen Verlauf der Oberfläche des Werkstücks, insbesondere scannend, d.h. im Fall einer taktil antastenden Koordinaten-Messeinrichtung besteht permanent Kontakt zwischen der Koordinaten-Messeinrichtung und der Oberfläche des Werkstücks. Alternativ, im Fall eines optischen Sensors, wird der Verlauf der Oberfläche jeweils in einem Messbereich der Messeinrichtung erfasst, während sich die Oberfläche des Werkstücks durch den Messbereich hindurch bewegt. Es sind auch weitere Messverfahren möglich, z.B. kann die Koordinaten-Messeinrichtung einen Abstandssensor aufweisen, der den Abstand zwischen ihr und der Oberfläche des Werkstücks misst. Abstandssensoren messen z.B. elektrisch (z. B. gemäß dem Prinzip der kapazitiven oder induktiven Messung) oder taktil (z.B. pneumatisch oder elektromotorisch angetrieben) oder optisch (z.B. durch Laufzeitmessung oder durch Triangulation).

In jedem Fall wird der Verlauf der Oberfläche des Werkstücks gemessen, während das Werkstück von der Drehvorrichtung gedreht wird. Messwerte dieses Verlaufs der Oberfläche, die von der Koordinaten-Messeinrichtung gemessen werden, können entweder kontinuierlich über den Verlauf der Oberfläche oder mit Abstand zueinander in Richtung des Verlaufs der Oberfläche aufgenommen werden, z.B. entsprechend einer Abtastrate, mit der die Koordinaten-Messeinrichtung während der Drehbewegung des Werkstücks arbeitet. In jedem Fall liegen jedoch Informationen über den Verlauf der Oberfläche vor, wenn die Messung des Verlaufs beendet ist.

Dabei ist hier und an anderen Stellen der Beschreibung unter einer Vermessung des Werkstücks bzw. einer Messung des Verlaufs der Oberfläche während der Drehung des Werkstücks (bzw. umgekehrt der Drehung während der Messung) auch der Fall zu verstehen, dass die Drehbewegung immer wieder unterbrochen wird und die Koordinaten-Messeinrichtung im Stillstand einen Punkt oder Bereich des Verlaufs der Oberfläche des Werkstücks misst. Selbstverständlich kann aber auch, je nach der Art der Messung der Oberfläche durch die Koordinaten-Messeinrichtung, auch ohne Stillstand während der Drehung gemessen werden.

Die Koordinaten-Messeinrichtung befindet sich, wie erwähnt, an einer bestimmten Position bezüglich der Drehachse, während sie den Verlauf der Oberfläche misst. Dabei handelt es sich um eine Position bezüglich der Umfangsrichtung um die Drehachse. Die verschiedenen Positionen, an denen die Koordinaten-Messeinrichtung nacheinander jeweils zur Messung eines Verlaufs der Oberfläche des Werkstücks positioniert wird, unterscheiden sich daher in Umfangsrichtung. Z.B. kann die jeweilige Umfangsposition daher durch einen Drehwinkel angegeben werden, der den Winkelabstand zu einer festen Winkelposition bezüglich der Drehachse angibt. Diese feste Winkelposition dreht sich allerdings nicht mit, wenn die Drehvorrichtung und damit das Werkstück um die Drehachse gedreht wird, während die Koordinaten-Messeinrichtung an der ebenfalls festen Umfangsposition den Verlauf der Oberfläche misst.

Abhängig vom Messprinzip der Koordinaten-Messeinrichtung kann ihre Position in radialer Richtung bezüglich der Drehachse variieren, abhängig vom Verlauf der Oberfläche des Werkstücks, die sie während der Drehung des Werkstücks um die Drehachse erfasst. Dies ist insbesondere der Fall, wenn der Verlauf der Oberfläche nicht kreislinienförmig und rotationssymmetrisch bezüglich der Drehachse ist und wenn die Koordinaten-Messeinrichtung die Oberfläche taktil antastet, um die Oberfläche zu messen. Dagegen kann ein optischer Sensor oder ein Abstandssensor den Verlauf der Oberfläche z.B. aus einer bezüglich der Drehachse festen radialen Position messen.

Unter der Messung des Verlaufs der Oberfläche wird das Messen zumindest einer Messgröße (zum Beispiel des Abstandes zur Oberfläche oder zumindest einer Koordinate des gemessenen Punktes auf der Oberfläche) verstanden, wobei die Messsignale zumindest auch Informationen enthalten, aus denen sich die Koordinaten der Oberfläche des Werkstücks entlang dem Verlauf bestimmen lassen. Allerdings, da die Drehvorrichtung im Allgemeinen keine ideale kreisrunde Drehbewegung mit im Raum feststehender Drehachse ausführt, sondern die erwähnten translatorischen und rotatorischen Bewegungsfehler aufweist, enthalten die Messsignale, welche die Koordinaten-Messeinrichtung bei der Messung des Verlaufs der Oberfläche erzeugt, fehlerhafte Informationen über den Verlauf der Oberfläche auf.

Es ist eine Erkenntnis der vorliegenden Erfindung, dass zwar die Messsignale aus der Messung eines Verlaufs der Oberfläche wegen der Bewegungsfehler der Drehvorrichtung fehlerhaft sind, jedoch auch die Information über den Bewegungsfehler enthalten. Wenn daher an verschiedenen Umfangspositionen jeweils der Verlauf der Oberfläche gemessen wird, enthält die Gesamt-Information der verschiedenen gemessenen Verläufe die Information sowohl über den eigentlichen Verlauf der Oberfläche ohne Bewegungsfehler als auch die Information über den Bewegungsfehler. Aufgrund der Messung des Verlaufs der Oberfläche an verschiedenen Umfangspositionen lassen sich diese unterschiedlichen Informationen voneinander separieren und somit bestimmen. Dabei wird bevorzugt, dass das Werkstück bezüglich des Teils der Drehvorrichtung, an dem es angeordnet ist und von dem es um die Drehachse gedreht wird, in derselben Position und Ausrichtung verbleibt, wenn die Koordinaten-Messeinrichtung in eine andere Umfangsposition gebracht wird. Der Teil der Drehvorrichtung und das Werkstück befinden sich daher auch in derselben Position und Ausrichtung zueinander, wenn die Koordinaten-Messeinrichtung in den verschiedenen Umfangspositionen jeweils den Verlauf der Oberfläche des Werkstücks misst. Dies hat den Vorteil, dass Positionen des Verlaufs der Oberfläche des Werkstücks immer denselben Positionen des Teils der Drehvorrichtung in Umfangsrichtung zugeordnet sind und dass das Werkstück die Drehvorrichtung in der gleichen Weise belastet. Es entstehen auch z. B. keine Fehler dadurch, dass die imaginäre Drehachse das Werkstück an einer anderen Position und/oder mit einer anderen Ausrichtung als zuvor durchstößt. Dadurch, dass lediglich die Umfangsposition der Koordinaten-Messeinrichtung verändert wird, wird auf einfache Weise die Trennung der Information über den Bewegungsfehler von der Information über den Verlauf der Oberfläche ermöglicht.

Insbesondere können die verschiedenen Umfangspositionen so vorgegeben sein oder so gewählt werden, dass sie in verschiedenen Segmenten des Umfangs, das heißt in verschiedenen Segmenten des Gesamt-Drehwinkelbereichs von 360° um die Drehachse liegen. Die Segmente, in denen jeweils lediglich eine der verschiedenen Umfangspositionen liegt, überlappen einander nicht und können zum Beispiel jeweils mindestens 90° betragen und allgemein formuliert dem Bruchteil des Gesamt-Drehwinkelbereichs entsprechen, der sich durch Division des Gesamt-Drehwinkelbereichs durch die Anzahl der verschiedenen Umfangspositionen ergibt. Wird zum Beispiel an drei Umfangspositionen gemessen, erstreckt sich jedes der drei Segmente über einen Winkelbereich von 120°. Im Fall von vier Umfangspositionen, erstreckt sich jedes der vier Segmente über einen Winkelbereich von 90°. Dadurch, dass die Umfangspositionen in verschiedenen Segmenten liegen, wird gewährleistet, dass verschiedene Informationen über den Bewegungsfehler der Drehvorrichtung gewonnen werden. Dies wäre zum Beispiel dann nicht oder nicht in ausreichendem Maße der Fall, wenn alle drei Umfangspositionen nah beieinander liegen.

Innerhalb der Segmente wird die Umfangsposition vorzugsweise so gewählt, dass die verschiedenen Umfangspositionen einen Mindest-Winkelabstand zueinander haben, der z.B. ein Drittel oder die Hälfte des Winkelbereichs beträgt, über den sich die Segmente erstrecken. Dies ermöglicht es insbesondere, dass die Umfangspositionen nicht den gleichen Winkelabstand zueinander haben, dennoch aber in den verschiedenen Segmenten liegen. Eine Anordnung der verschiedenen Umfangspositionen mit ungleichen Winkelabständen zwischen den benachbarten Umfangspositionen hat den Vorteil, dass bei der Drehbewegung periodisch wirksame Bewegungsfehler erfasst werden können.

Vorzugsweise weichen alle Winkelabstände der benachbarten Umfangspositionen, mit Ausnahme eines der Winkelabstände zweier benachbarter Umfangspositionen, von dem konstanten Winkelabstand ab, der sich bei gleichmäßiger Verteilung der Umfangspositionen um die Drehachse ergeben würde (bei drei Umfangspositionen z. B. ist dies ein konstanter Winkelabstand von 120°). Die Abweichung beträgt z. B. zumindest ein Achtel, vorzugsweise zumindest ein Sechstel, des Winkelbereichs der Segmente. Wenn daher z. B. die Segmente ebenfalls 120° betragen, der Mindest-Winkelabstand ein Drittel von 120°, das heißt 40°, betragen soll und sich zwei gewählte Winkelabstände um zumindest ein Achtel, das heißt um 15°, von dem konstanten Winkelabstand unterscheiden sollen, könnten die drei Umfangspositionen zum Beispiel an den Winkelpositionen 60° (im ersten Segment zwischen 0° und 120°), 143° (im zweiten Segment zwischen 120° und 240°) und 267° (im dritten Segment zwischen 240° und 360°) betragen.

Wenn Vorabinformationen über die Bewegungsfehler der Drehvorrichtung vorhanden sind, können die Umfangspositionen alternativ oder im Einklang mit der vorhergehenden Beschreibung so gewählt werden, dass sich die Bewegungsfehler an allen Umfangspositionen oder an einer Mehrzahl der Umfangspositionen besonders groß sind und sich daher deutlich als Fehler auf den gemessenen Verlauf der Oberfläche auswirken. Dies stellt sicher, dass die Bewegungsfehler aus den Messsignalen ermittelt werden können.

Bei dem Bewegungsfehler, der sich durch Separierung von den redundanten Oberflächeninformationen über den Verlauf der Oberfläche des Werkstücks bestimmen lässt, handelt es sich um einen reproduzierbaren Bewegungsfehler der Drehvorrichtung. Bei hoch qualitativen Drehvorrichtungen, wie sie in der Koordinatenmesstechnik verwendet werden, kann davon ausgegangen werden, dass der nicht reproduzierbare Anteil des Bewegungsfehlers sehr gering ist, wenn die Anordnung des Werkstücks an der Drehvorrichtung und außerdem die Ausrichtung der Drehvorrichtung im Gravitationsfeld der Erde nicht verändert wird. Dies gilt mit einer Einschränkung auch dann, wenn die Koordinaten-Messeinrichtung in eine andere Umfangsposition bezüglich der Drehachse gebracht wird und dann wieder einen Verlauf der Oberfläche des Werkstücks misst, während die Drehachse das Werkstück dreht. Die Einschränkung besteht darin, dass eine taktil antastende Koordinaten-Messeinrichtung eine Messkraft auf die Oberfläche aufbringt. Die Messkraft ist in der Regel jedoch klein und Drehvorrichtungen für die Koordinatenmesstechnik sind in der Regel so konstruiert, dass die Messkraft keinen wesentlichen Bewegungsfehler verursacht.

Im Folgenden wird darauf eingegangen, dass nicht nur ein Werkstück von der Koordinaten-Messeinrichtung vermessen werden kann, sondern mehrere Werkstücke, die nacheinander an der Drehvorrichtung angeordnet werden können, insbesondere mehrere Werkstücke ähnlicher Art oder gleichen Typs. Entsprechend kann das erste Werkstück, dessen Verlauf der Oberfläche in der erfindungsgemäßen Weise von der Koordinaten-Messeinrichtung aus verschiedenen Umfangspositionen gemessen wird, später von einem Werkzeug bearbeitet werden, während das Werkstück an der Drehvorrichtung angeordnet ist und von dieser gedreht wird. Außerdem ist es möglich, dass nicht das erste Werkstück, das beispielsweise ein Musterteil oder Kalibrierkörper ist, sondern ein ähnliches oder typgleiches Werkstück später an der Drehvorrichtung angeordnet wird und von einem Werkzeug bearbeitet wird. Es wird daher bevorzugt, die Vermessung des Werkstücks unter Bedingungen durchzuführen, die auch während einer späteren Vermessung oder Bearbeitung des Werkstücks, eines ähnlichen Werkstücks oder eines typgleichen Werkstücks herrschen.

Z.B. kann bei Verwendung einer taktil antastenden Koordinaten-Messeinrichtung der Verlauf der Oberfläche des Werkstücks in einem Bereich gemessen werden, in dem auch ein ähnliches oder typgleiches Werkstücks später vermessen werden soll, und insbesondere mit derselben Koordinaten-Messeinrichtung auch vermessen wird. Z.B. wird das ähnliche oder typgleiche Werkstück an der gleichen Stelle der Drehvorrichtung positioniert und von der Koordinatenmesseinrichtung ein Verlauf der Oberfläche des ähnlichen oder typgleichen Werkstücks gemessen, der an der gleichen Stelle (insbesondere an der gleichen axialen Position bezüglich der Drehachse der Drehvorrichtung) liegt, wie es bei der Vermessung des ersten Werkstücks zum Zweck der Separierung der Informationen über den Verlauf der Oberfläche einerseits und der Informationen über den Bewegungsfehler andererseits der Fall war. Auf diese Weise können Werkstücke aus Serienproduktionen mit hoher Genauigkeit und insgesamt bei geringem Aufwand für die Bestimmung des Bewegungsfehlers gemessen werden.

Durch eine optionale Wiederholung der Ausführung des erfindungsgemäßen Verfahrens (optional nach einer fest vorgegebenen Anzahl von Werkstücken), kann das Ergebnis einer vorherigen Durchführung des erfindungsgemäßen Verfahrens überprüft werden und/oder berücksichtigt werden, dass sich die Umgebungsbedingungen, wie beispielsweise die Temperatur, verändert hat. Wenn daher z.B. eine Änderung der Temperatur gemessen wurde, die ein vorgegebenes Kriterium erfüllt (z.B. ein Mindest-Temperaturunterschied ist überschritten), kann das dann zu vermessende Werkstück aus der Serienproduktion wieder an verschiedenen Umfangspositionen von der Koordinaten-Messeinrichtung vermessen werden.

Gemäß den Patentansprüchen wird daher unter Berücksichtigung der von den redundanten Oberflächeninformationen über den Verlauf der Oberfläche des ersten, bereits vermessenen Werkstücks separierten Fehlerinformationen über die Bewegungsfehler der Drehvorrichtung Koordinaten einer Oberfläche eines zweiten Werkstücks (insbesondere eines typgleichen Werkstücks) von der Koordinaten-Messeinrichtung gemessen. Die Koordinaten-Messeinrichtung befindet sich dabei an der gleichen Axialposition bezüglich der axialen Richtung der Drehachse und optional auch an einer der Umfangspositionen, an denen die Koordinaten-Messeinrichtung während der Drehung des ersten Werkstücks um die Drehachse positioniert war, um den Verlauf der Oberfläche des ersten Werkstücks zu messen.

Insbesondere kann das erste Werkstück bei einer Ausrichtung der Drehvorrichtung im Gravitationsfeld der Erde von der an den verschiedenen Umfangspositionen positionierten Koordinaten-Messeinrichtung gemessen werden, während die Drehvorrichtung jeweils das Werkstück um die Drehachse dreht. Dadurch wird gewährleistet, dass die Gewichtskraft des ersten Werkstücks dieselben Kräfte und Momente auf die Drehvorrichtung ausübt, die bei gleicher Ausrichtung der Drehvorrichtung und gleicher Anordnung eines zweiten Werkstücks, das dem ersten Werkstück ähnlich oder typgleich ist, ebenfalls auf die Drehvorrichtung einwirken. Es treten daher dieselben reproduzierbaren Bewegungsfehler bei der Vermessung des ersten Werkstücks und des zweiten Werkstücks auf und können daher durch die erfindungsgemäße Vermessung des ersten Werkstücks mit der an den verschiedenen Umfangspositionen positionierten Koordinaten-Messeinrichtung gemessen werden und von den geometrischen Informationen über das Werkstück separiert werden.

Wenn die Koordinaten-Messeinrichtung nicht an derselben Umfangsposition positioniert werden kann, an der bzw. an denen die Koordinaten-Messeinrichtung bei der Vermessung des ersten Werkstücks positioniert war, wird es bevorzugt, die Koordinaten-Messeinrichtung bei der Vermessung des zweiten Werkstücks so nahe wie möglich an den Positionen während der Vermessung des ersten Werkstücks anzuordnen. Auch bei lediglich ungefähr gleicher Positionierung können Effekte einer geometrischen Verstärkung der Bewegungsfehler durch Positionierung der Koordinaten-Messeinrichtung an weit auseinander liegenden Axialpositionen reduziert oder vermieden werden. Auch können die Bewegungsfehler für eine Positionierung der Koordinaten-Messeinrichtung an einer anderen Position, insbesondere an einer anderen Axialposition bezüglich der Drehachse, rechnerisch als erwartete Fehler aus den separierten Bewegungsfehlern ermittelt werden. Darauf wird noch näher eingegangen.

Wenn ein erstes (oder einziges) Werkstück in der erfindungsgemäßen Weise während der Drehung durch die Drehvorrichtung gemessen wird, ist eine vorher stattfindende Korrektur der Bewegungsfehler der Drehvorrichtung nicht erforderlich, da die Informationen über den Bewegungsfehler in den Messergebnissen der Vermessung des Verlaufs der Oberfläche des Werkstücks mittels von der an verschiedenen Umfangspositionen der Koordinaten-Messeinrichtung gemessen werden. Dagegen werden die anderen Werkstücke vorzugsweise nicht an verschiedenen Umfangspositionen der Koordinaten-Messeinrichtung gemessen, sondern z.B. lediglich an einer Umfangsposition. Diese Umfangsposition kann eine besonders gut geeignete Umfangsposition sein die durch Auswertung der Messsignale der Vermessung des ersten Werkstücks bestimmt werden kann. Außerdem werden die anderen Werkstücke (oder im Allgemeinen: zumindest ein anderes, zweites Werkstück) vorzugsweise unter Verwendung der Fehlerinformationen vermessen und/oder bearbeitet, die von den redundanten Oberflächeninformationen aus den verschiedenen gemessenen Verläufen der Oberfläche des ersten Werkstücks separiert wurden. Insbesondere findet mit den separierten Fehlerinformationen, d.h. mit den Bewegungsfehlern, eine Korrektur der Drehbewegung der Drehvorrichtung statt, die das zweite Werkstück während der Vermessung und/oder Bearbeitung dreht. Insbesondere kann die Korrektur dadurch durchgeführt werden, dass entsprechende Korrekturdaten maschinenlesbar abgespeichert werden und z.B. von einer Steuerung eines Koordinatenmessgeräts, das die Koordinaten-Messeinrichtung zur Vermessung des zweiten Werkstücks verwendet, oder von einer Werkzeugmaschine, die das zweite Werkstück unter Verwendung eines Werkzeugs bearbeitet, berücksichtigt werden. Z.B. berechnet die Steuerung des KMG während der Messung von Oberflächenkoordinaten des zweiten Werkstücks aus den maschinenlesbaren Daten eine Korrektur in Form einer Verschiebung des gemessenen Oberflächenpunktes des zweiten Werkstücks, die eine Abweichung zwischen der realen Drehbewegung der Drehvorrichtung von der idealen, gewünschten Drehbewegung der Drehvorrichtung wieder rückgängig macht.

Vorzugsweise führt die Drehvorrichtung jeweils zumindest eine vollständige Umdrehung des Werkstücks um die Drehachse aus, während die Koordinaten-Messeinrichtung an einer festen Umfangsposition bezüglich der Drehachse positioniert ist und den Verlauf der Oberfläche des Werkstücks misst. Dadurch ist gewährleistet, dass die verschiedenen Verläufe, die die Koordinaten-Messeinrichtung an den verschiedenen Umfangspositionen misst, jeweils die maximal mögliche Information über den Bewegungsfehler und optional, wenn sich die Koordinaten-Messeinrichtung an den verschiedenen Umfangspositionen an derselben Axialposition befindet, auch dieselbe Information über den Verlauf der Oberfläche aufweist. Selbstverständlich kann die Axialposition der Koordinaten-Messeinrichtung in den verschiedenen Umfangspositionen im Allgemeinen nur bezogen auf die ideale Drehachse die gleiche sein, da Bewegungsfehler der Drehvorrichtung auch zu Abweichungen (z.B. zu einer Taumelbewegung) der realen Drehachse von der idealen Drehachse führen. Entsprechendes gilt daher auch für die Umfangspositionen. Diese sind zwar vorzugsweise fest vorgegeben, können aber lediglich in Bezug auf die ideale Drehachse präzise eingestellt werden. Allerdings sind Drehvorrichtungen, die für die Koordinatenmessung oder Werkstückherstellung eingesetzt werden, in der Regel so präzise, dass sich trotz der Bewegungsfehler keine wesentlichen, für die Ausführung des erfindungsgemäßen Verfahrens bedeutsamen Unterschiede in den Fehlerinformationen und den redundanten Oberflächeninformationen ergeben, die aus den verschiedenen Verläufen der Oberfläche stammen.

Die Erfindung hat ferner den Vorteil, dass eine Koordinaten-Messeinrichtung eines Koordinatenmessgerätes und damit desjenigen KMG verwendet werden kann, das auch zur Vermessung anderer Bereiche der Oberfläche des Werkstücks verwendet wird, und/oder das danach zumindest ein weiteres Werkstück, welches an der Drehvorrichtung angeordnet wird, vermisst. Es ist somit keine zusätzliche Halterung für Messsensoren erforderlich, die Marsh in der oben erwähnten Veröffentlichung vorschlägt. Da das KMG üblicherweise fähig ist, die Koordinaten-Messeinrichtung relativ zu dem Werkstück zu bewegen, können auch Werkstücke unterschiedlichen Typs in der erfindungsgemäßen Weise vermessen werden und/oder dasselbe Werkstück an verschiedenen Axialpositionen in der erfindungsgemäßen Weise vermessen werden.

Die Erfindung ist jedoch nicht auf die Ausführung maximal einer vollständigen Umdrehung des Werkstücks während der Messung des Verlaufs der Oberfläche des Werkstücks beschränkt. Vielmehr kann die Drehvorrichtung das Werkstück um mehr als eine vollständige Umdrehung drehen, z.B. um eineinhalb Umdrehungen oder zumindest um mehrere vollständige Umdrehungen, sodass auch innerhalb des gemessenen Verlaufs der Oberfläche, während die Koordinaten-Messeinrichtung an derselben Umfangsposition positioniert ist, redundante Informationen gewonnen wird und auf diese Weise z.B. die Messunsicherheit verringert wird. Die Informationen sind redundant, da nacheinander gemessene Abschnitte des Verlaufs der Oberfläche in demselben Bereich der Oberfläche liegen, da nach einer vollständigen Umdrehung wieder derselbe Bereich erreicht wird. Es wird bevorzugt, dass die Drehvorrichtung das Werkstück um eine ganze Anzahl vollständiger Umdrehungen dreht, bei nicht veränderter Umfangsposition der Koordinaten-Messeinrichtung.

Das erfindungsgemäße Verfahren und die entsprechende Anordnung eignen sich insbesondere dann besonders gut, wenn eine Bestimmung der Bewegungsfehler der Drehvorrichtung mit allgemeingültigem Ergebnis der Bestimmung nicht möglich ist oder zu aufwendig ist. Z.B. kann die Drehvorrichtung vom Anwender unter verschiedenen Bedingungen eingesetzt werden, z.B. bei unterschiedlicher Ausrichtung der Drehachse im Gravitationsfeld der Erde und/oder mit unterschiedlichen an der Drehvorrichtung angeordneten Werkstücken, die unterschiedliche Kräfte und Drehmomente auf die Drehvorrichtung ausüben. Z.B. treten bei horizontal verlaufender Drehachse völlig andere Kräfte und Momente auf, die insbesondere durch die Gewichtskräfte der Drehvorrichtung selbst und des Werkstücks verursacht werden, als bei einer vertikal verlaufenden Drehachse. Um die verschiedenen Ausrichtungen der Drehvorrichtung und optional auch die verschiedenen Kräfte und Momente, die das Werkstück ausübt, allgemein gültig zu beschreiben, ist hoher Aufwand erforderlich. Z.B. müsste ein entsprechendes mathematisches Modell verwendet werden, das alle vorkommenden Ausrichtungen und Kräfte sowie Momente berücksichtigt. Ferner sind dafür zeitaufwendige Messungen in der Art von Kalibrierungen der Drehvorrichtung erforderlich. Dagegen ist der Aufwand zur Ausführung des erfindungsgemäßen Verfahrens jeweils bei veränderten Bedingungen (z.B. bei einer bestimmten Ausrichtung der Drehachse) verhältnismäßig gering.

Ferner ermöglicht das erfindungsgemäße Verfahren, auch den Bewegungsfehler von ungenauen Drehvorrichtungen zu verbessern. Zumindest können die reproduzierbaren Anteile am Bewegungsfehler ermittelt und z.B. korrigiert werden. Die nicht reproduzierbaren Fehleranteile werden insbesondere bei Ausführung vollständiger Umdrehungen des Werkstücks während der Messung des Verlaufs der Oberfläche ausgemittelt.

Außerdem ist es gemäß einer bevorzugten Ausführungsform der Erfindung möglich, die von den redundanten Oberflächeninformationen separierten Fehlerinformationen (d.h. die ermittelten Bewegungsfehler) dazu zu verwenden, vorhandene Fehlerinformationen über Fehler der Drehvorrichtung zu überprüfen und optional zu korrigieren. Solche vorhandenen Fehlerinformationen werden z.B. vom Hersteller der Drehvorrichtung mitgeliefert und sind z.B. in der oben bereits erwähnten Weise maschinenlesbar und damit für Koordinatenmessgeräte und Werkzeugmaschinen verwendbar.

Durch die in der erfindungsgemäßen Weise ermittelten Fehlerinformationen kann zumindest selektiv für die jeweilige Betriebssituation (z.B. die Axialposition des Koordinatenmessgerätes, die gültige Umgebungstemperatur und/oder die derzeit auftretenden Kräfte und Momente) eine Überprüfung der vorhandenen Fehlerinformationen stattfinden. Z.B. wird die Verwendung der maschinenlesbaren Daten deaktiviert, sodass eine automatische Korrektur durch das KMG oder die Werkzeugmaschine unter Verwendung der maschinenlesbaren Daten nicht stattfindet. Auf diese Weise ist der gesamte Bewegungsfehler für die Messung des Verlaufs der Oberfläche durch die Koordinaten-Messeinrichtung voll wirksam.

Z.B. kann ein entsprechendes Koordinatenmessgerät daher einen speziellen Betriebsmodus aufweisen, in dem etwaig vorhandene maschinenlesbare Daten zur Korrektur von Bewegungsfehlern der Drehvorrichtung nicht verwendet werden, während das erfindungsgemäße Verfahren ausgeführt wird. Dies ermöglicht es dem Anwender insbesondere zu beurteilen, ob eine erneute Kalibrierung der Drehvorrichtung insgesamt erforderlich ist und/oder ob die Drehvorrichtung unter Umständen abgenutzt ist und daher gewartete oder ersetzt werden muss.

Allgemein wird es daher auch bevorzugt, dass abhängig von der Überprüfung vorhandener Fehlerinformationen, die nicht zwangsläufig als maschinenlesbare Daten für eine automatische Korrektur vorliegen müssen, ein Signal ausgegeben wird, das den Bedarf für eine Kalibrierung der Drehvorrichtung und/oder eine Wartung oder einen Ersatz anzeigt. Das Signal wird z.B. dann ausgegeben, wenn ein vorgegebenes Kriterium erfüllt ist, das sich sowohl auf die vorhandenen Fehlerinformationen als auch auf die von den redundanten Oberflächeninformationen separierten Fehlerinformationen bezieht. Z.B. kann das Signal ausgegeben werden, wenn sich die separierten Fehlerinformationen um mehr als ein vorgegebener Grenzwert von den vorhandenen Fehlerinformationen unterscheiden.

Alternativ kann eine automatische Korrektur auf Basis vorhandener Fehlerinformationen über den Bewegungsfehler der Drehvorrichtung während der Ausführung des erfindungsgemäßen Verfahrens stattfinden. In diesem Fall sind in den Messsignalen, die den Verlauf der Oberfläche des Werkstücks wiedergeben und die von der Koordinaten-Messeinrichtungen an den verschiedenen Umfangspositionen erzeugt wurden, lediglich Restfehler der Bewegung der Drehvorrichtung und/oder Fehler der automatischen Korrektur enthalten. Der Vorteil besteht darin, dass die Restfehler und/oder Unterschiede unter den realen Messbedingungen bestimmt werden. Die gleichzeitig in den Messsignalen enthaltenen redundanten Oberflächeninformationen ermöglichen daher eine besonders genaue Bestimmung der Koordinaten der Werkstückoberfläche, insbesondere in dem Bereich, der dem Verlauf entspricht.

Die Erfindung kann insbesondere zur Vermessung von Bereichen einer Werkstückoberfläche angewendet werden, die einen Außenumfang des Werkstücks bilden, wie es z.B. bei zylindrischen, aber auch bei nicht rotationssymmetrischen Umfangsflächen von Werkstücken der Fall ist. Eine Umfangsfläche ist dadurch charakterisiert, dass die Oberflächennormale quer und insbesondere senkrecht zur Drehachse der Drehvorrichtung verläuft, an der das Werkstück angeordnet ist. Die Erfindung ermöglicht aber auch die Vermessung eines Verlaufs einer Oberfläche, deren Oberflächennormale parallel oder annähernd parallel zur Drehachse verläuft. Z.B. im Fall eines zylindrischen Werkstücks mit kreisförmiger Endfläche, die zentral von der (gedachten) Symmetrieachse durchstoßen wird, kann die Endfläche in einem Abstand zur Drehachse in ihrem Verlauf gemessen werden. In diesem Fall misst die Koordinaten-Messeinrichtung z.B. lediglich die Ebenheit der Oberfläche durch Messung der Koordinaten in Richtung der Koordinatenachse, welche parallel zur Drehachse verläuft.

Die Erfindung ist auch nicht darauf beschränkt, dass die Koordinaten-Messeinrichtung für ihre Positionierung an den verschiedenen Umfangspositionen bezüglich der Drehachse bewegt wird. Vielmehr kann die Koordinaten-Messeinrichtung im Labor-Koordinatensystem (d.h. bezüglich der Umgebung der Messanordnung) ruhen, während die Drehvorrichtung mit dem an ihr angeordneten Werkstück insgesamt um eine zweite Drehachse gedreht wird, die koaxial zu der Drehachse der Drehvorrichtung verläuft. Hierzu kann z.B. eine zweite Drehvorrichtung verwendet werden, deren Drehachse koaxial zu der Drehachse der zu überprüfenden bzw. für die Messung zu verwendenden Drehvorrichtung verläuft. Die Koordinaten-Messeinrichtung wird daher aus einer ersten Umfangsposition in eine zweite Umfangsposition gebracht, indem die Drehvorrichtung von einer zweiten Drehvorrichtung, deren Drehachse koaxial zu der Drehachse der ersten Drehvorrichtung verläuft, gedreht wird, während die Koordinaten-Messeinrichtung an ihrem Ort verbleibt. Selbstverständlich sind auch Kombinationen möglich, d.h. es kann sowohl eine Drehung der Drehvorrichtung gemeinsam mit dem an ihr angeordneten Werkstück um eine koaxiale Drehachse stattfinden als auch eine Bewegung der Koordinaten-Messeinrichtung, die in Umfangsrichtung stattfinden kann und/oder in radialer Richtung bezüglich der Drehachse und/oder in Axialrichtung der Drehachse (d.h. parallel zur Drehachse oder in Richtung der Drehachse). Ein Vorteil besteht darin, dass auf einfache Weise eine Koordinaten-Messeinrichtung verwendet werden kann, die einen einzigen Freiheitsgrad der Messung hat, nämlich bezüglich der radialen Richtung. Dies ist die Richtung von der Koordinaten-Messeinrichtung zu der Drehachse. Da diese Koordinaten-Messeinrichtung nicht bewegt wird, muss sie auch nicht neu in Richtung der Drehachse ausgerichtet werden, wenn sie an einer anderen Umfangsposition misst. Eine Neu-Ausrichtung der Koordinaten-Messeinrichtung wäre ein zusätzlicher, mit Aufwand verbundener Schritt.

Hieraus folgt aber auch ein Vorteil eines Koordinatenmessgerätes, wenn die Koordinaten-Messeinrichtung bewegt wird, um in eine geänderte Umfangsposition gebracht zu werden. Ein typisches Koordinatenmessgerät, das die Messeinrichtung in zumindest zwei voneinander unabhängigen Richtungen bewegen kann, ist hierzu fähig. Auch ist es bei Koordinatenmessgeräten üblich, dass die Messeinrichtung nicht nur einen einzigen Freiheitsgrad der Messung hat. Eine solche Messeinrichtung muss daher nicht neu in Richtung der Drehachse ausgerichtet werden, wenn sie in die geänderte Umfangsposition bewegt wird.

Insbesondere wird vorgeschlagen: Ein Verfahren zum Reduzieren von Fehlern einer Drehvorrichtung bei der Bestimmung von Koordinaten eines Werkstücks oder bei der Bearbeitung eines Werkstücks, wobei die Drehvorrichtung eine Drehbewegung des Werkstücks um eine Drehachse der Drehvorrichtung während der Bestimmung der Koordinaten oder während der Bearbeitung des Werkstücks ermöglicht, und wobei das Verfahren folgende Schritte aufweist:

a) ein erstes Werkstück wird an der Drehvorrichtung angeordnet,

b) eine Koordinaten-Messeinrichtung zur Messung von Koordinaten einer Oberfläche des ersten Werkstücks wird an einer ersten Umfangsposition bezüglich der Umfangsrichtung der Drehachse positioniert,

c) das Werkstück wird von der Drehvorrichtung um die Drehachse gedreht, während von der an der ersten Umfangsposition positionierten Koordinaten-Messeinrichtung ein erster Verlauf der Oberfläche des ersten Werkstück, der aufgrund der Drehung des ersten Werkstücks um die Drehachse herum verläuft, gemessen wird, sodass entsprechende erste Messsignale des ersten Verlaufs erzeugt werden,

d) die Koordinaten-Messeinrichtung wird an einer zweiten Umfangsposition bezüglich der Umfangsrichtung der Drehachse positioniert, die sich von der ersten Umfangsposition unterscheidet,

e) das Werkstück wird von der Drehvorrichtung um die Drehachse gedreht, während von der an der zweiten Umfangsposition positionierten Koordinaten-Messeinrichtung ein zweiter Verlauf der Oberfläche des ersten Werkstück, der aufgrund der Drehung des ersten Werkstücks um die Drehachse herum verläuft, gemessen wird, sodass entsprechende zweite Messsignale des zweiten Verlaufs erzeugt werden,

f) optional werden die Schritte d) und e) zumindest ein weiteres Mal wiederholt, d.h. die Koordinaten-Messeinrichtung wird an jeweils einer weiteren Umfangsposition bezüglich der Umfangsrichtung der Drehachse positioniert, die sich von der ersten Umfangsposition und der zweiten Umfangsposition sowie von anderen Umfangspositionen unterscheidet, an denen die Koordinaten-Messeinrichtung bereits positioniert war und an dem die Koordinaten-Messeinrichtung einen zugeordneten Verlauf der Oberfläche des ersten Werkstücks bereits gemessen hat, und das Werkstück wird von der Drehvorrichtung um die Drehachse gedreht, während von der an der weiteren Umfangsposition positionierten Koordinaten-Messeinrichtung ein weiterer Verlauf der Oberfläche des ersten Werkstück, der aufgrund der Drehung des ersten Werkstücks um die Drehachse herum verläuft, gemessen wird, sodass entsprechende weitere Messsignale des weiteren Verlaufs erzeugt werden,

g) aus den ersten, aus den zweiten und aus den optionalen weiteren Messsignalen, die redundante Oberflächeninformationen über die um die Drehachse herum verlaufende Oberfläche des ersten Werkstücks und Fehlerinformationen über Fehler der Drehvorrichtung aufgrund von Abweichungen zwischen tatsächlichen Positionen und tatsächlichen Ausrichtungen der Drehachse einerseits und entsprechenden idealen Positionen und idealen Ausrichtungen der Drehachse andererseits aufweisen, werden die redundanten Oberflächeninformationen und die Fehlerinformationen voneinander separiert.

Ferner wird vorgeschlagen: Eine Anordnung zum Reduzieren von Fehlern einer Drehvorrichtung bei der Bestimmung von Koordinaten eines Werkstücks oder bei der Bearbeitung eines Werkstücks, wobei die Drehvorrichtung eine Drehbewegung des Werkstücks um eine Drehachse der Drehvorrichtung während der Bestimmung der Koordinaten oder während der Bearbeitung des Werkstücks ermöglicht, und wobei die Anordnung Folgendes aufweist:

- die Drehvorrichtung, welche ein erstes Teil und eine relativ zu dem ersten Teil drehbewegliches zweites Teil aufweist, wobei ein erstes Werkstück an dem ersten Teil anordenbar ist, so dass es von der Drehvorrichtung um die Drehachse drehbar ist,
- eine Koordinaten-Messeinrichtung zur Messung von Koordinaten einer Oberfläche des ersten Werkstück,
- eine Steuerung, die ausgestaltet ist,

• durch Steuern der Koordinaten-Messeinrichtung, die an einer ersten Umfangsposition bezüglich der Umfangsrichtung der Drehachse positioniert ist, einen ersten Verlauf der Oberfläche des ersten Werkstücks zu messen und entsprechende erste Messsignale zu erzeugen, wobei der erste Verlauf der Oberfläche aufgrund einer Drehung des ersten Werkstücks durch die Drehvorrichtung um die Drehachse herum verläuft,

• durch Steuern der Koordinaten-Messeinrichtung, die an einer zweiten Umfangsposition bezüglich der Umfangsrichtung der Drehachse positioniert ist, einen zweiten Verlauf der Oberfläche des ersten Werkstücks zu messen und entsprechende zweite Messsignale zu erzeugen, wobei die zweite Umfangsposition von der ersten Umfangsposition verschieden ist und der zweite Verlauf der Oberfläche aufgrund einer Drehung des ersten Werkstücks durch die Drehvorrichtung um die Drehachse herum verläuft,

• optional durch Steuern der Koordinaten-Messeinrichtung, die bei zumindest einer weiteren optionalen Messung an einer weiteren Umfangsposition bezüglich der Umfangsrichtung der Drehachse positioniert ist, einen weiteren Verlauf der Oberfläche des ersten Werkstücks zu messen und entsprechende weitere Messsignale zu erzeugen, wobei die weitere Umfangsposition von der ersten Umfangsposition und von der zweiten Umfangsposition sowie von optionalen anderen weiteren Umfangspositionen verschieden ist und der weitere Verlauf der Oberfläche aufgrund einer Drehung des ersten Werkstücks durch die Drehvorrichtung um die Drehachse herum verläuft,

- eine Separationseinrichtung, die ausgestaltet ist, aus den ersten, den zweiten und aus den optionalen weiteren Messsignalen, die redundante Oberflächeninformationen über die um die Drehachse herum verlaufende Oberfläche des ersten Werkstücks und Fehlerinformationen über Fehler der Drehvorrichtung aufweisen, wobei die Fehler aufgrund von Abweichungen zwischen tatsächlichen Positionen und tatsächlichen Ausrichtungen der Drehachse einerseits und entsprechenden idealen Positionen und idealen Ausrichtungen der Drehachse andererseits auftreten, die redundanten Oberflächeninformationen und die Fehlerinformationen voneinander zu separieren.

Insbesondere bleiben die Position und Ausrichtung des ersten Werkstücks bezüglich der Drehvorrichtung in Schritt d) des Verfahrens unverändert, sodass das erste Werkstück in Schritt e) dieselbe Position und Ausrichtung bezüglich der Drehvorrichtung hat wie in Schritt c).

Vorzugsweise wird die Koordinaten-Messeinrichtung in dem oben genannten Schritt f) des Verfahrens (bzw. als weitere Umfangsposition bezüglich der Anordnung) an einer dritten Umfangsposition bezüglich der Umfangsrichtung der Drehachse positioniert, die sich von der ersten Umfangsposition und der zweiten Umfangsposition unterscheidet, und wird das Werkstück von der Drehvorrichtung um die Drehachse gedreht, während von der an der dritten Umfangsposition positionierten Koordinaten-Messeinrichtung ein dritter Verlauf der Oberfläche des ersten Werkstück, der aufgrund der Drehung des ersten Werkstücks um die Drehachse herum verläuft, gemessen wird, sodass entsprechende dritte Messsignale des dritten Verlaufs erzeugt werden.

Insbesondere liegen die erste Umfangsposition, die zweite Umfangsposition und die optionale(n) weitere(n) Umfangsposition(en), an denen die Koordinaten-Messeinrichtung bezüglich der Umfangsrichtung der Drehachse positioniert wird, an der gleichen Axialposition bezüglich der axialen Richtung der Drehachse. Wie erwähnt, ermöglicht dies insbesondere eine besonders genaue Bestimmung der Koordinaten des Werkstücks über den gemessenen Verlauf der Oberfläche und/oder eine besonders genaue Bestimmung des Bewegungsfehlers.

Allgemein wird bevorzugt, aus den von den Fehlerinformationen separierten redundanten Oberflächeninformationen Koordinaten der um die Drehachse herum verlaufenden Oberfläche des ersten Werkstücks zu bestimmen. Die Anordnung kann eine Koordinaten-Bestimmungseinrichtung aufweisen, die entsprechend ausgestaltet ist.

Ferner wird es bevorzugt, die von den redundanten Oberflächeninformationen separierten Fehlerinformationen dazu zu verwenden, vorhandene Fehlerinformationen über Fehler der Drehvorrichtung zu überprüfen. Die Anordnung kann eine Fehler-Überprüfungseinrichtung aufweisen, die entsprechend ausgestaltet ist.

Insbesondere unter Bezugnahme auf die oben erwähnte Vermessung mehrerer Werkstücke gleichen Typs, kann die Steuerung ausgestaltet sein, unter Berücksichtigung der von den redundanten Oberflächeninformationen separierten Fehlerinformationen und unter Verwendung der Koordinaten-Messeinrichtung eine Messung von Koordinaten einer Oberfläche eines zweiten Werkstücks zu steuern, während die Koordinaten-Messeinrichtung an der ersten Umfangsposition, an der zweiten Umfangsposition, an der optionalen weiteren Umfangsposition oder an einer der optionalen weiteren Umfangspositionen angeordnet ist, insbesondere an derselben axialen Position bezüglich der Drehachse.

Insbesondere unter Bezugnahme auf die oben erwähnte Einstellung der Umfangsposition der Koordinaten-Messeinrichtung, kann die Anordnung eine zweite Drehvorrichtung aufweisen, deren Drehachse koaxial zu der Drehachse der Drehvorrichtung verläuft, und wobei die Steuerung ausgestaltet ist, die Koordinaten-Messeinrichtung aus der ersten Umfangsposition in die zweite Umfangsposition zu bringen, indem sie die Drehvorrichtung, an der das erste Werkstück angeordnet ist, durch Drehung der zweiten Drehvorrichtung dreht, während die Koordinaten-Messeinrichtung an ihrem Ort verbleibt.

Insbesondere werden aus den von den redundanten Oberflächeninformationen separierten Fehlerinformationen erwartete Fehlerwerte der Drehvorrichtung ermittelt, die jeweils für eine relative Arbeitsposition und Arbeitsausrichtung der Koordinaten-Messeinrichtung oder eines Bearbeitungswerkzeuges einer Werkzeugmaschine zur Bearbeitung eines Werkstücks einerseits und der Drehvorrichtung andererseits erwartet werden, wobei aus den erwarteten Fehlerwerten der Drehvorrichtung zumindest eine Arbeitsposition und/oder Arbeitsausrichtung der Koordinaten-Messeinrichtung oder des Bearbeitungswerkzeug ermittelt wird, für die der erwartete Fehlerwert der Drehvorrichtung bei einer vorgegebenen Mess-Aufgabe zur Bestimmung von Koordinaten eines Werkstücks oder einer vorgegebenen Bearbeitungs-Aufgabe zur Bearbeitung eines Werkstücks

o kleiner ist als für andere Arbeitspositionen und/oder Arbeitsausrichtungen und/oder
o eine vorgegebene Bedingung erfüllt.

Die Anordnung kann dementsprechend eine Prognoseeinrichtung aufweisen, die ausgestaltet ist, aus den von den redundanten Oberflächeninformationen separierten Fehlerinformationen erwartete Fehlerwerte der Drehvorrichtung zu ermitteln, die jeweils für eine relative Arbeitsposition und Arbeitsausrichtung der Koordinaten-Messeinrichtung oder eines Bearbeitungswerkzeuges einer Werkzeugmaschine zur Bearbeitung eines Werkstücks einerseits und der Drehvorrichtung andererseits erwartet werden, wobei die Anordnung eine Ermittlungseinrichtung aufweist, die ausgestaltet ist, aus den erwarteten Fehlerwerten der Drehvorrichtung zumindest eine Arbeitsposition und/oder Arbeitsausrichtung der Koordinaten-Messeinrichtung oder des Bearbeitungswerkzeug zu ermitteln, für die der erwartete Fehlerwert der Drehvorrichtung bei einer vorgegebenen Mess-Aufgabe zur Bestimmung von Koordinaten eines Werkstücks oder einer vorgegebenen Bearbeitungs-Aufgabe zur Bearbeitung eines Werkstücks

    o kleiner ist als für andere Arbeitspositionen und/oder Arbeitsausrichtungen und/oder
    o eine vorgegebene Bedingung erfüllt.

Bei der Ermittlung der erwarteten Fehlerwerte kann insbesondere zwischen durch Separation und/oder Messung ermittelten Fehlerwerten interpoliert werden und/oder extrapoliert werden. Außerdem kann zwischen bereits ermittelten erwarteten Fehlerwerten interpoliert und/oder extrapoliert werden. Im Ergebnis erhält man z.B. für einen Bereich möglicher Arbeitspositionen und/oder für einen Bereich möglicher Arbeitsausrichtungen der Koordinaten-Messeinrichtung oder des Bearbeitungswerkzeuges jeweils den erwarteten Fehler der Drehvorrichtung. Aus dem erwarteten Fehler, der an den Messpunkten der Fehlermessung gleich dem gemessenen Fehler sein kann, kann nun zumindest eine Arbeitsposition und/oder Arbeitsausrichtung ermittelt werden.

Ferner kann zumindest eine Arbeitsposition und/oder eine Arbeitsausrichtung der Koordinaten-Messeinrichtung oder des Bearbeitungswerkzeuges ermittelt werden, für die der erwartete Fehler der Drehvorrichtung klein ist und/oder eine vorgegebene Bedingung erfüllt. Die vorgegebene Bedingung fordert z.B., dass der Fehler der Drehvorrichtung einen bestimmten Fehlerwert nicht erreicht oder nicht überschreitet. Insbesondere kann zumindest eine Arbeitsposition und/oder Arbeitsausrichtung ermittelt werden, für die der Fehler der Drehvorrichtung kleiner ist als für andere Arbeitspositionen und/oder Arbeitsausrichtungen. Die vorgegebene Bedingung kann aber auch in Bezug auf eine Mess-Aufgabe oder eine Bearbeitungs-Aufgabe beziehen, bei der ein Verlauf der Oberfläche des Werkstücks in Bezug auf eine Welligkeit des Verlaufs mit einer bestimmten Ordnung (zum Beispiel der Ordnung drei, das heißt es gibt drei Wellen der Abweichung zwischen einem ideal kreisrunden und dem realen, tatsächlichen Verlauf der Oberfläche) betrachtet wird. Z. B. kann die vorgegebene Bedingung verlangen, dass die Amplitude der Welligkeit mit einem Fehler gemessen wird, der kleiner als ein Grenzwert ist, bzw. dass die Amplitude der Welligkeit bei der Herstellung des Werkstücks kleiner als ein Grenzwert ist.

Bei der Ermittlung der zumindest einen Arbeitsposition und/oder Arbeitsausrichtung kann wie erwähnt eine vorgegebene Mess-Aufgabe zur Bestimmung von Koordinaten des Werkstücks oder eine vorgegebene Bearbeitungs-Aufgabe zur Bearbeitung des Werkstücks berücksichtigt werden. Z.B. kann die Aufgabe die Arbeitsausrichtung der Koordinaten-Messeinrichtung oder des Bearbeitungswerkzeugs festlegen oder einen möglichen oder zulässigen Bereich für die Arbeitsausrichtung festlegen. Das gleiche kann für die Arbeitsposition gelten. Bezüglich der Arbeitsausrichtung werden zwei Arbeitsausrichtungen insbesondere als identisch angesehen, wenn sie parallel zueinander verlaufen, d.h. durch Parallelverschiebung miteinander zur Deckung gebracht werden können. Insbesondere kann die Arbeitsposition als axiale Arbeitsposition definiert sein, d.h. die Arbeitsposition wird als Koordinatenwert einer Koordinatenachse (z.B. z-Achse genannt) angegeben, die mit der idealen Drehachse zusammenfällt. Insbesondere in diesem Fall kann die Arbeitsausrichtung immer als senkrecht zu der idealen Drehachse verlaufend definiert sein, wenn z.B. Kräfte beim Antasten eines Werkstücks oder Bearbeiten eines Werkstücks senkrecht zur idealen Drehachse ausgeübt werden.

Z.B kann ein Bearbeitungswerkzeug lediglich in einer bestimmten Arbeitsausrichtung an der Werkzeugmaschine betrieben werden. Entsprechend kann die Beweglichkeit eines taktilen oder optischen Tasters eines Koordinatenmessgeräts, mit dem ein Werkstück vermessen werden soll, z.B. aus Gründen der Reduzierung des Messfehlers so eingeschränkt sein, dass lediglich eine Arbeitsausrichtung oder ein kleiner Bereich von verschiedenen Arbeitsausrichtungen möglich ist. Abhängig von dem zu vermessenden oder zu bearbeitenden Werkstück kann es alternativ oder zusätzlich lediglich möglich sein, die Koordinaten-Messeinrichtung oder das Bearbeitungswerkzeug in einer bestimmten Arbeitsposition oder in einem bestimmten Bereich von Arbeitspositionen relativ zu der Drehvorrichtung anzuordnen. Wenn es sich z.B. um ein sehr langes Werkstück handelt, dessen Ende vermessen werden soll und das in axialer Richtung der Drehachse der Drehvorrichtung auszurichten ist, kann das Ende des Werkstücks z.B. entweder sehr dicht an einer Halterung der Drehvorrichtung oder sehr weit weg von dieser Halterung angeordnet werden.

Sowohl die Arbeitsposition als auch die Arbeitsausrichtung sind daher auf die Drehvorrichtung bezogen und nicht auf das Werkstück. Bezüglich der Fehler der Drehvorrichtung kommt es meist ausschließlich oder überwiegend auf diese Arbeitsposition und/oder diese Arbeitsausrichtung bezüglich der Drehvorrichtung an. Darüber hinaus kann es noch weitere Einflüsse auf den Fehler der Drehvorrichtung geben, z.B. das Gewicht des Werkstücks, das Trägheitsmoment des Werkstücks, die Kraft, die die Koordinaten-Messeinrichtung oder das Bearbeitungswerkzeug auf das Werkstück ausübt, andere Parameter der Vermessung/Bearbeitung des Werkstücks (z. B. Schnitttiefe des Werkzeugs) und/oder die Drehgeschwindigkeit, mit der die Drehvorrichtung das Werkstück dreht. Bei einer Ausgestaltung der vorliegenden Erfindung kann zumindest einer dieser zusätzlichen Einflussfaktoren und/oder jede beliebige Kombination dieser Einflussfaktoren in die Ermittlung des Fehlers der Drehvorrichtung bei der jeweiligen Arbeitsausrichtung und/oder Arbeitsposition eingehen. Z.B. kann eine Messung des Fehlers der Drehvorrichtung durchgeführt werden, während der jeweilige Einflussfaktor oder die jeweilige Kombination von Einflussfaktoren wirkt.

Insbesondere kann gemäß der ermittelten zumindest einen Arbeitsposition und/oder Arbeitsausrichtung eine Messung von Koordinaten eines zweiten Werkstücks oder eine Bearbeitung des zweiten Werkstücks gesteuert werden, wobei das zweite Werkstück und das erste Werkstück ähnlich oder vom gleichen Typ sind. Dementsprechend kann die Steuerung ausgestaltet sein, gemäß der ermittelten zumindest einen Arbeitsposition und/oder Arbeitsausrichtung eine Messung von Koordinaten eines zweiten Werkstücks oder eine Bearbeitung des zweiten Werkstücks zu steuern, wobei das zweite Werkstück und das erste Werkstück vom gleichen Typ sind.

Insbesondere wird die zumindest eine aus den erwarteten Fehlerwerten der Drehvorrichtung ermittelte Arbeitsposition und/oder Arbeitsausrichtung von einer Ermittlungseinrichtung an die Steuerung der Koordinaten-Messeinrichtung oder der Werkzeugmaschine ausgegeben. Dabei ist es möglich, dass die Ermittlungseinrichtung Teil der Steuerung ist. In diesem Fall wird an einen weiteren Teil der Steuerung ausgegeben, der die Vermessung des Werkstücks durch die Koordinaten-Messeinrichtung oder die Bearbeitung des Werkstücks durch die Werkzeugmaschine steuert. Auf diese Weise kann automatisch nach der Ermittlung der zumindest einen Arbeitsposition und/oder Arbeitsausrichtung eine Vermessung des Werkstücks oder eine Bearbeitung des Werkstücks begonnen werden.

Bei der Koordinaten-Messeinrichtung handelt es sich zum Beispiel um einen Taster zum taktilen Abtasten oder optischen Abtasten des Werkstücks. Alternativ oder zusätzlich kann es sich um einen Sensor (zum Beispiel einen Messkopf) handeln, der ausgestaltet ist abhängig von der Vermessung des Werkstücks Signale zu erzeugen, aus denen die Koordinaten des Werkstücks bestimmbar sind. Der Taster kann an dem Messkopf angebracht sein. Die Koordinaten-Messeinrichtung ist zum Beispiel Teil eines Koordinatenmessgerätes. Bei dem Bearbeitungswerkzeug der Werkzeugmaschine kann sich zum Beispiel um ein Schneidwerkzeug oder Schleifwerkzeug handeln.

Zum Umfang der Erfindung gehört auch ein Koordinatenmessgerät mit der Anordnung zur Reduktion des Fehlers einer Drehvorrichtung. Insbesondere kann die Koordinaten-Messeinrichtung Bestandteil des KMG sein und/oder die Steuerung Bestandteil des Koordinatenmessgerät sein, sodass die Steuerung z. B. auch die Bewegung beweglicher Teile des KMG (z. B. entlang von Linearachsen und/oder Drehachsen) steuert.

Wie bereits erwähnt, kann die Erfindung entsprechend auf dem Gebiet der Werkzeugmaschinen angewendet werden. Häufig weisen Werkzeugmaschinen zwei Drehvorrichtungen (meist als Spindeln bezeichnet) auf. Die eine Spindel dreht das Werkstück während der Bearbeitung. Die andere Spindel erlaubt eine Drehung des Bearbeitungswerkzeugs. Dabei sind die Drehachsen der beiden Spindeln in vielen Fällen parallel zueinander. Durch die Erfindung kann die Werkzeugspindel in eine günstige Drehposition (und damit in eine entsprechende Arbeitsausrichtung) gebracht werden und/oder in eine günstige Arbeitsposition entlang der Drehachse der Werkstückspindel.

Insbesondere kann aus den ermittelten erwarteten Fehlerwerten der Drehvorrichtung eine Fehlerkarte oder ein Fehler-Modell erzeugt werden. Die Karte oder das Modell können z.B. in einem Datenspeicher gespeichert werden, auf den die Steuerung des Koordinatenmessgeräts oder der Werkzeugmaschine Zugriff hat. Der Unterschied zwischen einer Fehlerkarte und einem Fehler-Modell besteht darin, dass in der Fehlerkarte die Fehlerwerte für die jeweiligen Arbeitspositionen und/oder Arbeitsausrichtungen hinterlegt sind, während ein Fehler-Modell zumindest eine Berechnungsvorschrift enthält, wie aus Informationen über die Fehlerwerte an gewünschten Arbeitspositionen und/oder Arbeitsausrichtungen die erwarteten Fehlerwerte berechnet werden können. Eine Kombination von Fehlerkarte und Fehler-Modell ist möglich. Z.B. kann das Fehler-Modell festlegen, wie aus in der Fehlerkarte enthaltenen Fehlerwerten für andere Arbeitspositionen und/oder Arbeitsausrichtungen erwartete Fehlerwerte bestimmt werden. Insbesondere können auch die oben erwähnten weiteren Einflüsse auf den Fehler der Drehvorrichtung, z.B. das Gewicht des Werkstücks, durch unterschiedliche, jeweils dem Einflussfaktor oder einer Kombination von Einflussfaktoren zugeordnete Fehlerkarten und/oder Fehler-Modelle berücksichtigt werden. Auch hierbei ist eine Kombination von Fehlerkarten und Fehler-Modellen möglich.

Insbesondere kann ein Fehler-Modell Informationen über die Drehvorrichtung besitzen (z.B. die Steifigkeit der Lagerung des drehbeweglichen Teils der Drehvorrichtung) und unter Verwendung dieser Informationen erwartete Fehlerwerte der Drehvorrichtung für zumindest eine Arbeitsausrichtung und/oder eine Arbeitsposition berechnen, die für bestimmte, insbesondere vorgegebene Aufgaben zu erwarten sind. Z.B. kann das Fehler-Modell auf diese Weise die Veränderung der Arbeitsbedingungen aufgrund von bei der Bearbeitung des Werkstücks oder beim Vermessen des Werkstücks wirkenden Kräften berücksichtigen.

Insbesondere kann die Steuerung des Koordinatenmessgeräts oder der Werkzeugmaschine bezüglich des Fehlers der Drehvorrichtung günstige Arbeitsausrichtungen und/oder Arbeitspositionen ermitteln und einem Benutzer vorschlagen. Wie oben erwähnt, kann die Steuerung diese günstigen Arbeitspositionen und/oder Arbeitsausrichtungen alternativ oder zusätzlich automatisch für den Arbeitsvorgang verwenden.

Auf dem Gebiet der Werkzeugmaschinen eignet sich die Erfindung insbesondere für schnell drehende Drehvorrichtungen, insbesondere Werkstückspindeln, da bei hohen Drehgeschwindigkeiten keine Kompensation des Fehlers der Drehvorrichtung, z.B. durch entsprechendes Nachführen des Bearbeitungswerkzeuges, möglich ist.

Die Erfindung eignet sich auch in Kombination mit rechnerischen Korrekturen des Fehlers der Drehvorrichtung. Z.B. kann die Drehvorrichtung kalibriert worden sein und können entsprechende Korrekturwerte zur Korrektur des Fehlers der Drehvorrichtung gespeichert sein, z.B. für den Zugriff der Steuerung des Koordinatenmessgeräts oder der Werkzeugmaschine. Das erfindungsgemäße Verfahren kann in diesem Fall unter Berücksichtigung der Korrekturen die erwarteten Restfehler für verschiedene Arbeitspositionen und/oder Arbeitsausrichtungen ermitteln und diese wie bereits beschrieben als erwartete Fehler der Drehvorrichtung nutzen.

Statt einer rechnerischen Korrektur der Fehler der Drehvorrichtung und der rechnerischen Ermittlung der erwarteten Restfehler kann die Messung der Fehler der Drehvorrichtung unter Berücksichtigung der Korrekturen durchgeführt werden und kann der Restfehler auf diese Weise gemessen werden. Daraus können wiederum die erwarteten Fehlerwerte ermittelt werden.

Ausführungsbeispiele der Erfindung werden nun unter Bezugnahme auf die beigefügte Zeichnung beschrieben. Die einzelnen Figuren der Zeichnung zeigen:

Fig. 1 eine Drehvorrichtung, insbesondere einen Drehtisch, für ein Koordinatenmessgerät, wobei auf dem drehbaren Teil der Drehvorrichtung ein rotationssymmetrisches Teil, hier ein Zylinder, angeordnet ist, dessen Symmetrieachse mit der Drehachse der Drehvorrichtung zusammenfällt und wobei schematisch eine bestimmte Arbeitsposition und Arbeitsausrichtung, z. B. einer Koordinaten-Messeinrichtung eines Koordinatenmessgeräts, dargestellt ist,

Fig. 2 die Darstellung aus Fig. 1, wobei die Arbeitsausrichtung und Arbeitsposition der Koordinaten-Messeinrichtung anders gewählt ist als in Fig. 1,

Fig. 3 eine Draufsicht auf die Anordnung in Fig. 2 zur Erläuterung des Winkels, den die Arbeitsausrichtung des Sensors mit einer Koordinatenachse einschließt, und damit zur Erläuterung der Umfangsposition der Koordinaten-Messeinrichtung,

Fig. 4 schematisch ein Koordinatenmessgerät in Portalbauweise, an dessen Tastkopf ein taktiler Taster angeordnet ist und auf dessen Basis ein Drehtisch angeordnet ist,

Fig. 5 schematisch zwei übereinandergestapelte Drehvorrichtung, die koaxiale Drehachsen aufweisen, wobei auf der oberen Drehvorrichtung ein Werkstück positioniert ist, das von einer taktil antastenden Koordinaten-Messeinrichtung gemessen wird, während das Werkstück von der oberen Drehvorrichtung gedreht wird, und

Fig. 6 schematisch ein Blockdiagramm einer Anordnung mit einer Drehvorrichtung, einer Messanordnung, einer Prognoseeinrichtung, einer Ermittlungseinrichtung und einer Steuerung eines Koordinatenmessgeräts oder einer Werkzeugmaschine.

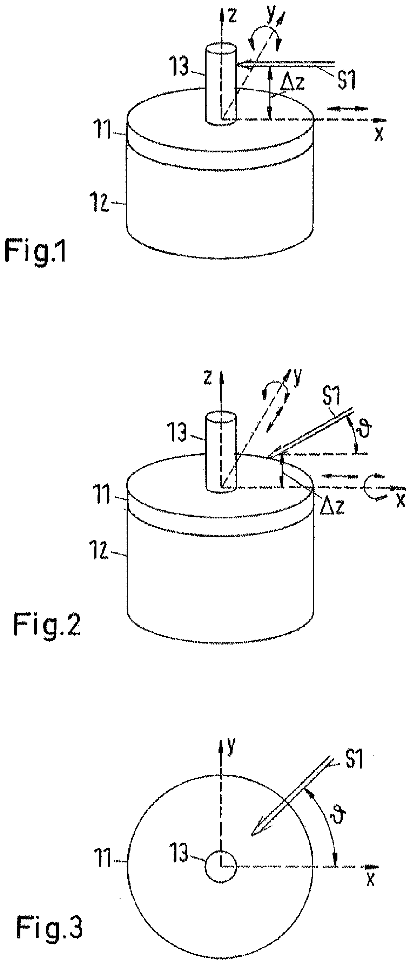

Die in Fig. 1 dargestellte Drehvorrichtung weist einen drehbaren Teil 11 auf, der relativ zu einem nicht drehbaren Teil 12 der Drehvorrichtung um eine ideale Drehachse drehbar ist, die in der Darstellung der Fig. 1 mit der z-Achse (z.B. die vertikale Achse) eines kartesischen Koordinatensystems x, y, z zusammenfällt. Die tatsächliche Drehachse der Drehvorrichtung 11, 12 weicht jedoch von der idealen Drehachse ab, da die Drehvorrichtung fehlerhaft ist.

Fig. 1 zeigt ein auf der Oberfläche des drehbaren Teils 11 angeordnetes zylindrisches Werkstück 13, dessen Zylinderachse in Richtung der realen Drehachse der Drehvorrichtung 11, 12 ausgerichtet ist. Für die folgenden Überlegungen wird angenommen, dass das zylindrische Werkstück 13 keinen Formfehler aufweist, d.h. ein idealer Zylinder ist. Wenn ein Sensor oder Taster eines Koordinatenmessgeräts oder analog ein Bearbeitungswerkzeug einer Werkzeugmaschine in der mit einem Doppellinien-Pfeil s1 dargestellten Richtung auf die Oberfläche des zylinderförmigen Teils 13 ausgerichtet ist, und wenn der drehbare Teil 11 der Drehvorrichtung gedreht wird und sich daher das zylinderförmige Werkstück 13 mitdreht, wirkt sich der Fehler der Drehvorrichtung, d.h. die Abweichung der realen Drehachse von der idealen Drehachse, auf die Vermessung oder Bearbeitung aus. Insbesondere wirkt sich der Fehler abhängig von der Arbeitsposition und Arbeitsausrichtung des Tasters, Sensors oder Werkzeugs in unterschiedlicher Weise aus. In dem in Fig. 1 dargestellten Fall ist die Arbeitsposition entlang der z-Achse des Koordinatensystems x, y, z um den Betrag $\Delta z$ nach oben (in Axialrichtung der Drehachse) verschoben und verläuft parallel zur x-Achse. Wie ein in zwei Richtungen weisender Pfeil entlang der x-Achse andeutet, kann der Fehler der Drehvorrichtung 11, 12 die Umfangsoberfläche des zylindrischen Teils 13 entlang der x-Achse in beide Richtungen verschieben, d.h. bei einer vollständigen Umdrehung des drehbaren Teils 11 schwankt die x-Position des Oberflächenbereichs des Teils 13, auf den der Taster, Sensor oder das Werkzeug ausgerichtet ist, in x-Richtung hin und her.

Fig. 2 zeigt die Anordnung aus Fig. 1, wobei jedoch die Arbeitsausrichtung geändert ist. In dem dargestellten Fall liegt die Arbeitsposition ebenfalls wie in Fig. 1 um den Betrag $\Delta z$ über der x-, y-Ebene (diese Ebene ist z. B. auch die Ebene der Drehtischoberfläche) des Koordinatensystems. Die Arbeitsausrichtung verläuft ebenfalls senkrecht zur z-Achse, schließt jedoch mit einer Parallelen zu der x-Achse einen Winkel $\vartheta$ ein. Eine entsprechende Draufsicht ist in Fig. 3 dargestellt. Die Umfangsposition ist somit verändert. Sie kann durch den Winkel $\vartheta$ angegeben werden.

Sowohl in Fig. 1 als auch in Fig. 2 ist durch Pfeile an gekrümmten Linien um die x-Achse bzw. y-Achse angedeutet, dass die reale Drehachse der Drehvorrichtung um die x-Achse und die y-Achse kippen (d.h. drehen bzw. rotieren) kann, während das drehbare Teil 11 gedreht wird.

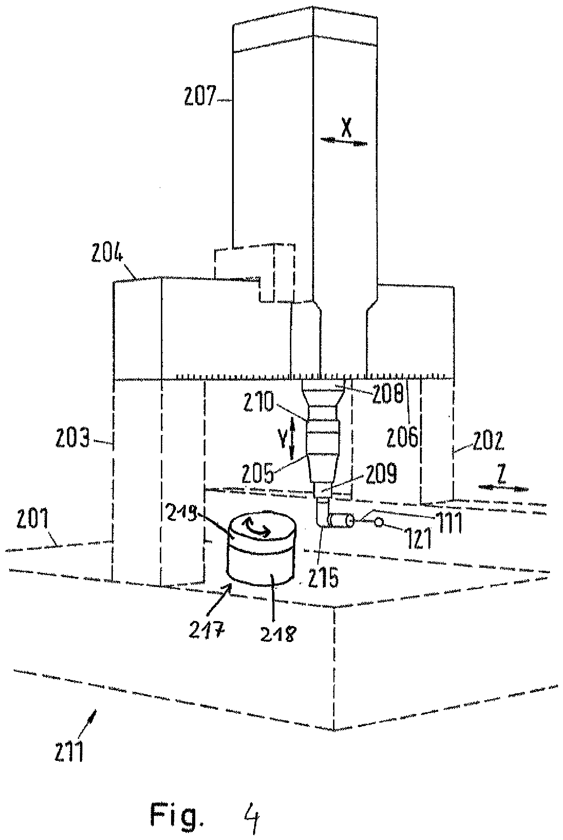

Das in Fig. 4 dargestellte Koordinatenmessgerät (KMG) 211 in Portalbauweise weist eine Basis 201 auf, über der Säulen 202, 203 in Z-Richtung eines kartesischen Koordinatensystems beweglich angeordnet sind. Die Säulen 202, 203 bilden zusammen mit einem Querträger 204 ein Portal des KMG 211. Der Querträger 204 ist an seinen gegenüberliegenden Enden mit den Säulen 202 bzw. 203 verbunden. Nicht näher dargestellte Elektromotoren verursachen die Linearbewegung der Säulen 202, 203 in Z-Richtung. Dabei ist z. B. jeder der beiden Säulen 202, 203 ein Elektromotor zugeordnet. Der Querträger 204 ist mit einem Querschlitten 207 kombiniert, welcher luftgelagert entlang dem Querträger 204 in X-Richtung des kartesischen Koordinatensystems beweglich ist. Die momentane Position des Querschlittens 207 relativ zu dem Querträger 204 kann anhand einer Maßstabsteilung 206 festgestellt werden. Die Bewegung des Querträgers 204 in X-Richtung wird durch einen weiteren Elektromotor angetrieben. An dem Querschlitten 207 ist eine in vertikaler Richtung bewegliche Pinole 208 gelagert, die an ihrem unteren Ende über eine Montageeinrichtung 210 und eine Drehvorrichtung 205 mit einer Koordinatenmesseinrichtung 209 verbunden ist. Die Koordinatenmesseinrichtung 209 weist einen abgewinkelten Tastkopf 215 auf, an dem ein Taststift 111 mit Tastkugel 121 abnehmbar angeordnet ist. Die Koordinatenmesseinrichtung 209 kann angetrieben durch einen weiteren Elektromotor relativ zu dem Querschlitten 207 in Y-Richtung des kartesischen Koordinatensystems bewegt werden. Durch die Elektromotoren des KMG kann der Tastkopf 209 in dem Bereich unterhalb des Querträgers 204 in nahezu beliebige Positionen bewegt werden. Ferner kann die Drehvorrichtung 205 den Tastkopf 215 um die Y-Achse drehen, sodass der Taststift 111 in unterschiedliche Richtungen ausgerichtet werden kann.

Auf der Basis 201 ist ein Drehtisch 217 (d.h. eine Drehvorrichtung) mit integriertem Drehpositionssensor (nicht in Fig. 4 dargestellt) angeordnet. Die Anordnung ist schematisch zu verstehen. In der Praxis wird der Drehtisch 217 an einer Position angeordnet sein, in der der Taststift 111 oder ein anderer Taststift ein auf dem Drehtisch 217 angeordnetes Werkstück (nicht dargestellt) möglichst ungehindert von allen Seiten in radialer Richtung der Drehachse des Drehtischs 217, d.h. in möglichst beliebigen Arbeitsausrichtungen und damit an verschiedenen Umfangspositionen, antasten kann. Entsprechendes gilt möglichst auch über den gesamten Höhenbereich entlang der Erstreckung der Drehachse der Drehvorrichtung 217 (d.h. in Axialrichtung der Drehachse) für alle Arbeitspositionen des Taststifts.

Bei dem in Fig. 4 dargestellten Koordinatenmessgerät handelt es sich lediglich um ein Ausführungsbeispiel. Die Koordinaten-Messeinrichtung oder eine andere Koordinaten-Messeinrichtung kann z. B. Bauteil eines Koordinatenmessgerätes anderen Typs sein, z. B. eines KMG in Gelenkarmbauweise.

Gemäß einer Ausführungsform des Verfahrens wird auf der Drehvorrichtung 217 ein Werkstück wie z.B. der Zylinder aus Fig. 1 bis Fig. 3 angeordnet und mit dem Taststift 111 der Verlauf der Oberfläche des Werkstücks gemessen, während die Drehvorrichtung 217 das Werkstück dreht. Insbesondere wird es scannend gemessen.

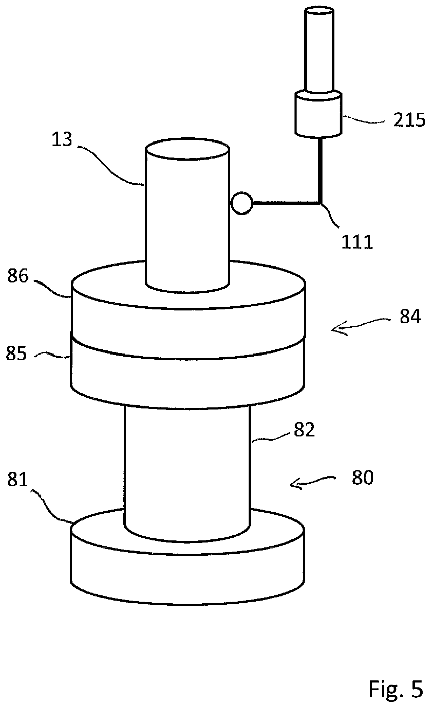

Fig. 5 zeigt eine erste, obere Drehvorrichtung 84, die ein erstes, unteres Teil 85 und ein relativ zu dem ersten Teil 85 um eine erste Drehachse drehbares zweites Teil 86 aufweist. Auf dem zweiten Teil 86 ist ein Werkstück 13 angeordnet.

Unterhalb der ersten Drehvorrichtung 84 ist eine zweite, untere Drehvorrichtung 80 angeordnet, die ein erstes Teil 81 und ein zweites, relativ zu dem ersten Teil 81 drehbares Teil 82 aufweist, die relativ zueinander um eine zweite Drehachse drehbar sind. Die erste Drehachse der ersten Drehvorrichtung 84 und die zweite Drehachse der zweiten Drehvorrichtung 80 sind koaxial zueinander.

Ferner ist das Werkstück 13 in dem Ausführungsbeispiel ein rotationssymmetrisches Werkstück, dessen Symmetrieachse koaxial zu den Drehachsen ausgerichtet ist. Allerdings ist es auch möglich, ein anderes, nicht rotationssymmetrisches Teil auf der ersten Drehvorrichtung anzuordnen, sodass es von der ersten Drehvorrichtung 84 drehbar ist. Ferner muss ein rotationssymmetrisches Werkstück nicht koaxial zur Drehachse der ersten Drehvorrichtung 84 angeordnet werden.

Eine Koordinaten-Messeinrichtung mit einem Taststift 111, der z.B. der Taststift 111 der Anordnung aus Fig. 4 ist, tastet den Außenumfang des Werkstücks 13 ab, während die erste Drehvorrichtung 84 das Werkstück 13 um die erste Drehachse dreht. Dabei bleibt die Koordinaten-Messeinrichtung ortsfest. Allerdings wird der Tatstift 111 abhängig von dem Verlauf der Oberfläche ausgelenkt, wie dies bei taktil antastenden Taststiften auf dem Gebiet der Koordinatenmesstechnik üblich ist, um das Messsignal zu erzeugen, aus welchem die Koordinaten-Messeinrichtung den Kontaktpunkt zwischen dem Taststift 111 und der Oberfläche des Werkstücks ermittelt. Insbesondere wird der Taststift 111 relativ zu einem Tastkopf 215 (der z.B. der Tastkopf aus Fig. 4 oder ein anderer Tastkopf ist) ausgelenkt. Dabei kann sich die Auslenkung während der Drehung des Werkstücks 13 insbesondere dann verändern, wenn Bewegungsfehler der Drehvorrichtung 84 zu einer Verschiebung des Werkstücks 13 entlang einer quer zur Drehachse verlaufenden Linearachse führen oder durch Drehung des Werkstücks 13 um eine quer zur Drehachse der Drehvorrichtung 84 verlaufende Drehachse führen. Auch ändert sich die Auslenkung des Taststifts 111, wenn der Verlauf der von dem Taststift 111 abgetasteten Oberfläche des Werkstücks 13 nicht rotationssymmetrisch zur idealen Drehachse ist. Allerdings können sich Abweichungen von der Rotationssymmetrie und Bewegungsfehler der Drehvorrichtung 84 auch kompensieren. Aus diesem Grund wird die Abtastung der Oberfläche des Werkstücks 13 während einer Drehung des Werkstücks 13 durch die Koordinatenmesseinrichtung 84 wiederholt, allerdings in anderer Umfangsposition der Koordinaten-Messeinrichtung bezüglich der ersten Drehachse der ersten Drehvorrichtung 84. Hierzu wird die zweite Drehvorrichtung 80 verwendet. Das zweite Teil 82 wird relativ zu dem ersten Teil 81 gedreht, sodass die erste Drehvorrichtung 84 mit dem darauf angeordneten Werkstück 13 gedreht wird. Im Ergebnis nimmt die Koordinaten-Messeinrichtung, ohne bewegt worden zu sein, eine andere Umfangsposition ein.

Der Vorteil der Verwendung einer zweiten Drehvorrichtung zur Einstellung der Umfangsposition besteht darin, dass die Koordinaten-Messeinrichtung nicht bewegt werden muss und insbesondere daher keine zusätzlichen Fehler entstehen können, die von einer anderen Lage oder Ausrichtung der Koordinaten-Messeinrichtung verursacht werden.

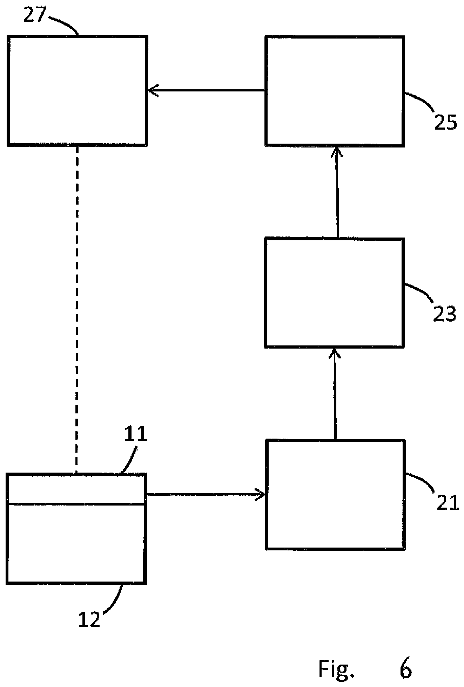

Fig. 6 zeigt schematisch eine Anordnung mit einer Drehvorrichtung, zum Beispiel der Drehvorrichtung gemäß Fig. 1 bis Fig. 4 oder der oberen Drehvorrichtung 84 gemäß Fig. 5. Ein drehbarer Teil 11 der Drehvorrichtung kann relativ zu einem nicht drehbaren Teil 12 gedreht werden. Die Messanordnung 21 ist ausgestaltet, den Verlauf der Oberfläche eines Werkstücks zu messen, das an dem drehbaren Teil 11 angeordnet ist, und entsprechende Messsignale einer Separationseinrichtung 23 zuzuführen. Diese Separationseinrichtung 23 ist ausgestaltet, aus der Gesamtheit der ersten, den zweiten und der optionalen weiteren Messsignale (die bei der Messung des jeweiligen ersten, zweiten oder optionalen weiteren von der Messeanordnung gemessenen Verlauf erzeugt werden), die redundanten Oberflächeninformationen und die Fehlerinformationen voneinander zu separieren, die in den Messsignalen insgesamt enthalten sind. Insbesondere bestimmt die Separationseinrichtung 23 die Oberflächeninformationen mittels einer Koordinaten-Bestimmungseinrichtung (zum Beispiel die Koordinaten der Oberfläche über den gemessenen Verlauf) und die Fehlerinformationen mittels einer Fehler-Bestimmungseinrichtung und damit die Bewegungsfehler der Drehvorrichtung 11, 12.

Optional ist eine Prognoseeinrichtung 25 mit der Separationseinrichtung 23 verbunden und ausgestaltet, aus den Fehlerinformationen erwartete Fehlerwerte der Drehvorrichtung 11, 12 zu ermitteln, die jeweils für eine relative Arbeitsposition und Arbeitsausrichtung der Koordinaten-Messeinrichtung oder eines Bearbeitungswerkzeuges einer Werkzeugmaschine zur Bearbeitung eines Werkstücks einerseits und der Drehvorrichtung 11, 12 andererseits erwartet werden. Ferner kann die Prognoseeinrichtung 25 eine Ermittlungseinrichtung aufweisen, die ausgestaltet ist, aus den erwarteten Fehlerwerten der Drehvorrichtung 11, 12 zumindest eine Arbeitsposition und/oder Arbeitsausrichtung der Koordinaten-Messeinrichtung oder des Bearbeitungswerkzeug zu ermitteln, für die der erwartete Fehlerwert der Drehvorrichtung 11, 12 bei einer vorgegebenen Mess-Aufgabe zur Bestimmung von Koordinaten eines Werkstücks oder einer vorgegebenen Bearbeitungs-Aufgabe zur Bearbeitung eines Werkstücks kleiner ist als für andere Arbeitspositionen und/oder Arbeitsausrichtungen und/oder eine vorgegebene Bedingung erfüllt.

Eine mit der Prognoseeinrichtung 25 verbundene Steuerung 27 ist ausgestaltet, die ermittelte Arbeitsposition und/oder Arbeitsausrichtung einzustellen. Dies ist schematisch durch eine gestrichelte Linie dargestellt. Die Koordinaten-Messeinrichtung oder das Bearbeitungswerkzeug, dessen Arbeitsposition und/oder Arbeitsausrichtung einzustellen ist, ist in Fig. 6 nicht explizit dargestellt.

Im Folgenden wird nun ein Beispiel für die Separation der Oberflächeninformationen des Werkstücks und der Fehlerinformationen (d.h. der Bewegungsfehler der Drehvorrichtung) voneinander beschrieben. Dabei wird von einer theoretisch möglichen idealen Form ausgegangen. Im Fall eines koaxial zu der idealen Drehachse angeordneten rotationssymmetrischen Werkstücks ist dies z.B. eine Kreislinie, deren Mittelpunkt von der idealen Drehachse durchstoßen wird. Abweichungen von der Idealform werden im Folgenden als Fehler R des Werkstücks bezeichnet. Unter Berücksichtigung der bekannten Idealform lässt sich aus dem Fehler R des Werkstücks der Oberflächenverlauf bestimmen, der mit der Koordinaten-Messeinrichtung während der Drehung des Werkstücks um die Drehachse der Drehvorrichtung gemessen wird. Der Fehler R des Werkstücks hängt vom Drehwinkel $\Theta$ ab, der die momentane Drehstellung des Werkstücks bezeichnet.

Die von der Koordinaten-Messeinrichtung an der ersten Umfangsposition bezüglich der Drehachse gemessenen Messsignale können daher als Signale der Fehlersumme aus dem Bewegungsfehler und dem Fehler des Werkstücks aufgefasst werden. Für die erste Umfangsposition wird diese Fehlersumme im Folgenden als $m_A$ bezeichnet. Sie kann als mathematische Funktion $m_A(\Theta)$ des Drehwinkels $\Theta$ aufgefasst werden, da das Werkstück von der Drehvorrichtung um die Drehachse gedreht wird.

Es kann nun ein Koordinatensystem mit zwei Koordinatenachsen eingeführt werden, die senkrecht zueinander verlaufen und jeweils senkrecht zur idealen Drehachse verlaufen. Dabei liegt der Ursprung dieses zweidimensionalen Koordinatensystems auf der idealen Drehachse an der axialen Position, an der sich die Koordinaten-Messeinrichtung befindet, wenn sie in der ersten, einer zweiten und einer dritten Umfangsposition, die sich voneinander unterscheiden, jeweils während der Drehung des Werkstücks durch die Drehvorrichtung den Verlauf der Oberfläche des Werkstücks misst. Dabei kann die Drehstellung des zweidimensionalen Koordinatensystems so gewählt werden, dass die erste Umfangsposition auf der x-Achse, also der ersten Achse des Koordinatensystems, liegt. Die andere Achse des Koordinatensystems wird als y-Achse bezeichnet.

Auch die an der zweiten und der dritten Umfangsposition von der Koordinaten-Messeinrichtung gemessenen Messsignale können als mathematische Funktionen $m_B (\Theta)$ bzw. $m_C (\Theta)$ des Drehwinkels $\Theta$ aufgefasst werden. Für die drei als Fehlerfunktionen $m_A$, $m_B$, $m_C$ aufgefassten Messsignale gilt somit:

$$m_A = R(\theta) + x(\theta) \tag{1}$$

$$m_B = R(\theta - \phi) + x(\theta)\cos(\phi) + y(\theta)\sin(\phi) \tag{2}$$

$$m_C = R(\theta - \psi) + x(\theta)\cos(\psi) + y(\theta)\sin(\psi) \tag{3}$$

Dabei sind $\Phi$ und $\psi$ die Winkel, die unter Nutzung der in den Gleichungen verwendeten trigonometrischen Funktionen die zweite Umfangsposition bzw. die dritte Umfangsposition bezeichnen. Ferner bezeichnen x ($\Theta$) bzw. y ($\Theta$) den Fehler der Drehvorrichtung in x- und y-Richtung. Diese Fehler sind wie oben erwähnt und wie auch der Fehler des Werkstücks mathematische Funktionen des Drehwinkels $\Theta$.

Durch Aufsummieren der Messsignale für die drei an den verschiedenen Umfangspositionen gemessenen Messsignale ergibt sich

$$M(\theta) = m_A(\theta) + a \times m_B(\theta) + b \times m_C(\theta) \tag{4}$$

Unter Berücksichtigung der entsprechend gewählten Einheitskoeffizienten a und b lässt sich der Bewegungsfehler der Drehvorrichtung folgendermaßen eliminieren. Dazu werden Gleichungen (1), (2) und (3) in Gleichung (4) eingesetzt:

$$\begin{aligned} M(\theta) = R(\theta) &+ x(\theta) \\ &+ a \times (R(\theta - \phi) + x(\theta)\cos(\phi) + y(\theta)\sin((\phi)) \\ &+ b \times (R(\theta - \psi) + x(\theta)\cos(\psi) + y(\theta)\sin((\psi)) \end{aligned} \tag{5}$$

Umgeformt ergibt sich:

$$\begin{aligned} M(\theta) = R(\theta) &+ a \times R(\theta - \phi) + b \times R(\theta - \psi) \\ &+ x(\theta) \times (1 + a \times \cos(\phi) + b \times \cos(\psi)) \\ &+ y(\theta) \times (a \times \sin(\phi) + b \times \sin(\psi)) \end{aligned} \tag{6}$$

Wenn in der Summe M ($\Theta$) der Messsignale (siehe Gleichung 4) die Bewegung der Drehvorrichtung, d.h. die Terme $x(\theta)$ und $y(\theta)$, nicht mehr vorkommen sollen, dann sind die Faktoren *a* und *b* so zu wählen, dass gilt:

$$1 + a \times \cos(\phi) + b \times \cos(\psi) = 0 \tag{7}$$

und

$$a \times \sin(\phi) + b \times \sin(\psi) = 0 \tag{8}$$

Aus den Gleichungen (7) und (8) ergibt sich für die Faktoren *a* und *b*:

$$a = \frac{-\sin(\psi)}{\sin(\psi - \phi)} \tag{9}$$

und

$$b = \frac{\sin(\phi)}{\sin(\psi - \phi)} \qquad (10)$$

Der gesuchte Fehler $R(\theta)$ des Werkstücks lässt sich in Form einer Fourier-Reihe wie folgt beschreiben:

$$R(\theta) = \sum_{k=1}^{\infty}(A_k \cos(k\theta) + B_k \sin(k\theta)) \qquad (11)$$

Ebenso lässt sich die Summe $M(\theta)$ der Messsignale (siehe Gleichung 4) in eine Fourier-Reihe zerlegen. Die Faktoren $a$ und $b$ sind dabei wie zuvor beschrieben richtig gewählt (Gleichungen 9 und 10):

$$M(\theta) = \sum_{k=1}^{\infty}(F_k \cos(k\theta) + G_k \sin(k\theta)) \qquad (12)$$

Die Koeffizienten $F_k$ und $G_k$ der Zerlegung lassen sich somit berechnen. Setzt man Gleichung (11) in Gleichung (6) ein, so lässt sich die Summe $M(\theta)$ der Messsignale auch wie folgt schreiben:

$$M(\theta) = \sum_{k=1}^{\infty}(A_k \cos(k\theta) + B_k \sin(k\theta))$$

$$+a \times \sum_{k=1}^{\infty}(A_k \cos(k(\theta - \phi)) + B_k \sin(k(\theta - \phi))) \qquad (13)$$

$$+b \times \sum_{k=1}^{\infty}(A_k \cos(k(\theta - \psi)) + B_k \sin(k(\theta - \psi)))$$

Mit den Additionstheoremen von Sinus und Kosinus erhält man

$$M(\theta) = \sum_{k=1}^{\infty}(A_k \cos(k\theta) + B_k \sin(k\theta))$$

$$+a \times \sum_{k=1}^{\infty}\left( \begin{array}{l} A_k \cos(k\theta)\cos(k\phi) + A_k \sin(k\theta)\sin(k\phi) \\ + B_k \sin(k\theta)\cos(k\theta) - B_k \cos(k\theta)\sin(k\phi) \end{array} \right)$$

$$+b \times \sum_{k=1}^{\infty}\left( \begin{array}{l} A_k \cos(k\theta)\cos(k\psi) + A_k \sin(k\theta)\sin(k\psi) \\ + B_k \sin(k\theta)\cos(k\theta) - B_k \cos(k\theta)\sin(k\psi) \end{array} \right) \qquad (14)$$

Nach $\sin(k\theta)$ und $\cos(k\theta)$ sortiert ergibt sich

$$M(\theta) = \sum_{k=1}^{\infty} \left( \begin{array}{c} sin(k\theta)\times \\ (A_k(a\sin k\phi)+b\sin(k\psi))+B_k(1+a\cos(k\phi)+b\cos(k\psi))) \\ + \cos(k\theta)\times \\ (A_k(1+a\cos(k\phi)+b\cos(k\psi))-B_k(a\sin(k\phi)+b\sin(k\psi))) \end{array} \right) \quad (15)$$

Durch Substitution mit

$$\alpha_k = 1 + a\cos(k\phi) + b\cos(k\psi)$$

und

$$\beta_k = 1 + b\sin(k\psi) + b\sin(k\phi)$$

lässt sich die Summe der Eingangssignale darstellen als

$$M(\theta) = \sum_{k=1}^{\infty}((A_k\alpha_k - B_k\beta_k)\cos(k\theta) + (A_k\beta_k + B_k\alpha_k)\sin(k\theta)) \quad (16)$$

Vergleicht man Gleichung (12) nun mit Gleichung (16), so erkennt man, dass Folgendes gelten muss:

$$F_k = A_k\alpha_k - B_k\beta_k \quad \text{und} \qquad\qquad (17)$$

$$G_k = A_k\beta_k - B_k\alpha_k$$

Da die Substitutionen $\alpha_k$ und $\beta_k$ bekannt sind, lässt sich das Gleichungssystem von Gleichung (17) für jedes $k$ lösen und lassen sich somit die obigen Koeffizienten $A_k$ und $B_k$ der Fourier-Reihe gemäß Gleichung (11) berechnen. Sind diese Koeffizienten bekannt, ist auch die Fourier-Reihe in Gleichung (11) vollständig bestimmt und der Fehler $R(\theta)$ des Werkstücks lässt sich durch Rücktransformation dieser Gleichung berechnen. Ist der Fehler berechnet, so lässt sich durch Gleichung (1) die Bewegung der Drehvorrichtung in x-Richtung, d.h. $x(\theta)$, berechnen. Ist dies nun bekannt, so können die Gl. (2) und (3) ebenfalls gelöst werden und die Fehlerseparation ist abgeschlossen.

In Zusammenhang mit der Erfindung werden insbesondere die in der folgenden Aufzählung enthaltenen Gegenstände genannt. Der Schutzgegenstand wird jedoch ausschließlich durch die beigefügten Patentansprüche definiert. Die auf dieser Seite beginnende Aufzählung enthält nicht die Patentansprüche:

1. Verfahren zum Reduzieren von Fehlern einer Drehvorrichtung (11, 12) bei der Bestimmung von Koordinaten eines Werkstücks (13) oder bei der Bearbeitung eines Werkstücks (13), wobei die Drehvorrichtung (11, 12) eine Drehbewegung des Werkstücks (13) um eine Drehachse der Drehvorrichtung (11, 12) während der Bestimmung der Koordinaten oder während der Bearbeitung des Werkstücks (13) ermöglicht, und wobei das Verfahren folgende Schritte aufweist:

a) ein erstes Werkstück (13) wird an der Drehvorrichtung (11, 12) angeordnet,
b) eine Koordinaten-Messeinrichtung (209) zur Messung von Koordinaten einer Oberfläche des ersten Werkstücks (13) wird an einer ersten Umfangsposition bezüglich der Umfangsrichtung der Drehachse positioniert,
c) das erste Werkstück (13) wird von der Drehvorrichtung (11, 12) um die Drehachse gedreht, während von der an der ersten Umfangsposition positionierten Koordinaten-Messeinrichtung (209) ein erster Verlauf der Oberfläche des ersten Werkstücks (13), der aufgrund der Drehung des ersten Werkstücks (13) um die Drehachse herum verläuft, gemessen wird, sodass entsprechende erste Messsignale des ersten Verlaufs erzeugt werden,
d) die Koordinaten-Messeinrichtung (209) wird an einer zweiten Umfangsposition bezüglich der Umfangsrichtung der Drehachse positioniert, die sich von der ersten Umfangsposition unterscheidet,

e) das erste Werkstück (13) wird von der Drehvorrichtung (11, 12) um die Drehachse gedreht, während von der an der zweiten Umfangsposition positionierten Koordinaten-Messeinrichtung (209) ein zweiter Verlauf der Oberfläche des ersten Werkstücks (13), der aufgrund der Drehung des ersten Werkstücks (13) um die Drehachse herum verläuft, gemessen wird, sodass entsprechende zweite Messsignale des zweiten Verlaufs erzeugt werden,

f) optional werden die Schritte d) und e) zumindest ein weiteres Mal wiederholt, d.h. die Koordinaten-Messeinrichtung (209) wird an jeweils einer weiteren Umfangsposition bezüglich der Umfangsrichtung der Drehachse positioniert, die sich von der ersten Umfangsposition und der zweiten Umfangsposition sowie von anderen Umfangspositionen unterscheidet, an denen die Koordinaten-Messeinrichtung (209) bereits positioniert war und an dem die Koordinaten-Messeinrichtung (209) einen zugeordneter Verlauf der Oberfläche des ersten Werkstücks (13) bereits gemessen hat, und das Werkstück (13) wird von der Drehvorrichtung (11, 12) um die Drehachse gedreht, während von der an der weiteren Umfangsposition positionierten Koordinaten-Messeinrichtung (209) ein weiterer Verlauf der Oberfläche des ersten Werkstücks (13), der aufgrund der Drehung des ersten Werkstücks (13) um die Drehachse herum verläuft, gemessen wird, sodass entsprechende weitere Messsignale des weiteren Verlaufs erzeugt werden,

g) aus den ersten, aus den zweiten und aus den optionalen weiteren Messsignalen, die redundante Oberflächeninformationen über die um die Drehachse herum verlaufende Oberfläche des ersten Werkstücks (13) und Fehlerinformationen über Fehler der Drehvorrichtung (11, 12) aufgrund von Abweichungen zwischen tatsächlichen Positionen und tatsächlichen Ausrichtungen der Drehachse einerseits und entsprechenden idealen Positionen und idealen Ausrichtungen der Drehachse andererseits aufweisen, werden die redundanten Oberflächeninformationen und die Fehlerinformationen voneinander separiert.

2. Verfahren nach Gegenstand 1, wobei die Position und Ausrichtung des ersten Werkstücks (13) bezüglich der Drehvorrichtung (11, 12) in Schritt d) unverändert bleiben, sodass das erste Werkstück (13) in Schritt e) dieselbe Position und Ausrichtung bezüglich der Drehvorrichtung (11, 12) hat wie in Schritt c).

3. Verfahren nach Gegenstand 1 oder 2, wobei die erste Umfangsposition, die zweite Umfangsposition und die optionale(n) weitere(n) Umfangsposition(en), an denen die Koordinaten-Messeinrichtung (209) bezüglich der Umfangsrichtung der Drehachse positioniert wird, an der gleichen Axialposition bezüglich der axialen Richtung der Drehachse liegen.

4. Verfahren nach einem der Gegenstände 1 bis 3, wobei aus den von den Fehlerinformationen separierten redundanten Oberflächeninformationen Koordinaten der um die Drehachse herum verlaufenden Oberfläche des ersten Werkstücks (13) bestimmt werden.

5. Verfahren nach einem der vorhergehenden Gegenstände, wobei die von den redundanten Oberflächeninformationen separierten Fehlerinformationen dazu verwendet werden vorhandene Fehlerinformationen über Fehler der Drehvorrichtung (11, 12) zu überprüfen.

6. Verfahren nach einem der vorhergehenden Gegenstände, wobei aus den von den redundanten Oberflächeninformationen separierten Fehlerinformationen erwartete Fehlerwerte der Drehvorrichtung (11, 12) ermittelt, die jeweils für eine relative Arbeitsposition und Arbeitsausrichtung der Koordinaten-Messeinrichtung (209) oder eines Bearbeitungswerkzeuges einer Werkzeugmaschine zur Bearbeitung eines Werkstücks (13) einerseits und der Drehvorrichtung (11, 12) andererseits erwartet werden, und wobei aus den erwarteten Fehlerwerten der Drehvorrichtung (11, 12) zumindest eine Arbeitsposition und/oder Arbeitsausrichtung der Koordinaten-Messeinrichtung (209) oder des Bearbeitungswerkzeug ermittelt wird, für die der erwartete Fehlerwert der Drehvorrichtung (11, 12) bei einer vorgegebenen Mess-Aufgabe zur Bestimmung von Koordinaten eines Werkstücks (13) oder einer vorgegebenen Bearbeitungs-Aufgabe zur Bearbeitung eines Werkstücks (13)

∘ kleiner ist als für andere Arbeitspositionen und/oder Arbeitsausrichtungen und/oder
∘ eine vorgegebene Bedingung erfüllt.

7. Verfahren nach dem vorhergehenden Gegenstand, wobei gemäß der ermittelten zumindest einen Arbeitsposition und/oder Arbeitsausrichtung eine Messung von Koordinaten eines zweiten Werkstücks oder eine Bearbeitung des zweiten Werkstücks gesteuert wird, wobei das zweite Werkstück und das erste Werkstück vom gleichen Typ sind.

8. Verfahren nach einem der vorhergehenden Gegenstände, wobei unter Berücksichtigung der von den redundanten Oberflächeninformationen separierten Fehlerinformationen Koordinaten einer Oberfläche eines zweiten Werkstücks von der Koordinaten-Messeinrichtung (209) gemessen werden, während die Koordinaten-Messeinrichtung (209) an der ersten Umfangsposition, an der zweiten Umfangsposition, an der optionalen weiteren Umfangsposition oder an einer der optionalen weiteren Umfangspositionen angeordnet ist.

9. Verfahren nach einem der vorhergehenden Gegenstände, wobei die Koordinaten-Messeinrichtung (209) aus der ersten Umfangsposition in die zweite Umfangsposition gebracht wird, indem die Drehvorrichtung (11, 12) von einer zweiten Drehvorrichtung, deren Drehachse koaxial zu der Drehachse der Drehvorrichtung (11, 12) verläuft, gedreht wird, während die Koordinaten-Messeinrichtung (209) an ihrem Ort verbleibt.

10. Anordnung zum Reduzieren von Fehlern einer Drehvorrichtung (11, 12) bei der Bestimmung von Koordinaten eines Werkstücks (13) oder bei der Bearbeitung eines Werkstücks (13), wobei die Drehvorrichtung (11, 12) eine Drehbewegung des Werkstücks (13) um eine Drehachse der Drehvorrichtung (11, 12) während der Bestimmung der Koordinaten oder während der Bearbeitung des Werkstücks (13) ermöglicht, und wobei die Anordnung Folgendes aufweist:

- die Drehvorrichtung (11, 12), welche ein erstes Teil (11) und eine relativ zu dem ersten Teil (11) drehbewegliches zweites Teil (12) aufweist, wobei ein erstes Werkstück (13) an dem ersten Teil (11) anordenbar ist, so dass es von der Drehvorrichtung (11, 12) um die Drehachse drehbar ist,
- eine Koordinaten-Messeinrichtung (209) zur Messung von Koordinaten einer Oberfläche des ersten Werkstücks (13),
- eine Steuerung (27), die ausgestaltet ist,

  • durch Steuern der Koordinaten-Messeinrichtung (209), die an einer ersten Umfangsposition bezüglich der Umfangsrichtung der Drehachse positioniert ist, einen ersten Verlauf der Oberfläche des ersten Werkstücks (13) zu messen und entsprechende erste Messsignale zu erzeugen, wobei der erste Verlauf der Oberfläche aufgrund einer Drehung des ersten Werkstücks durch die Drehvorrichtung (11, 12) um die Drehachse herum verläuft,
  • durch Steuern der Koordinaten-Messeinrichtung (209), die an einer zweiten Umfangsposition bezüglich der Umfangsrichtung der Drehachse positioniert ist, einen zweiten Verlauf der Oberfläche des ersten Werkstücks (13) zu messen und entsprechende zweite Messsignale zu erzeugen, wobei die zweite Umfangsposition von der ersten Umfangsposition verschieden ist und der zweite Verlauf der Oberfläche aufgrund einer Drehung des ersten Werkstücks durch die Drehvorrichtung (11, 12) um die Drehachse herum verläuft,
  • optional durch Steuern der Koordinaten-Messeinrichtung (209), die bei zumindest einer weiteren optionalen Messung an einer weiteren Umfangsposition bezüglich der Umfangsrichtung der Drehachse positioniert ist, einen weiteren Verlauf der Oberfläche des ersten Werkstücks (13) zu messen und entsprechende weitere Messsignale zu erzeugen, wobei die weitere Umfangsposition von der ersten Umfangsposition und von der zweiten Umfangsposition sowie von optionalen anderen weiteren Umfangspositionen verschieden ist und der weitere Verlauf der Oberfläche aufgrund einer Drehung des ersten Werkstücks durch die Drehvorrichtung (11, 12) um die Drehachse herum verläuft,

- eine Separationseinrichtung (23), die ausgestaltet ist, aus den ersten, den zweiten und aus den optionalen weiteren Messsignalen, die redundante Oberflächeninformationen über die um die Drehachse herum verlaufende Oberfläche des ersten Werkstücks (13) und Fehlerinformationen über Fehler der Drehvorrichtung (11, 12) aufgrund von Abweichungen zwischen tatsächlichen Positionen und tatsächlichen Ausrichtungen der Drehachse einerseits und entsprechenden idealen Positionen und idealen Ausrichtungen der Drehachse andererseits aufweisen, die redundanten Oberflächeninformationen und die Fehlerinformationen voneinander zu separieren.

11. Anordnung nach Gegenstand 10, wobei die erste Umfangsposition, die zweite Umfangsposition und die optionale(n) weitere(n) Umfangsposition(en), an denen die Koordinaten-Messeinrichtung (209) bezüglich der Umfangsrichtung der Drehachse positioniert wird, an der gleichen Axialposition bezüglich der axialen Richtung der Drehachse liegen.

12. Anordnung nach Gegenstand 10 oder 11, wobei die Anordnung eine Koordinaten-Bestimmungseinrichtung (23) aufweist, die ausgestaltet ist, aus den von den Fehlerinformationen separierten redundanten Oberflächeninformationen Koordinaten der um die Drehachse herum verlaufenden Oberfläche des ersten Werkstücks zu bestimmen.

13. Anordnung nach einem der Gegenstände 10 - 12, wobei die Anordnung eine Fehler-Überprüfungseinrichtung aufweist, die ausgestaltet ist, unter Verwendung der von den redundanten Oberflächeninformationen separierten Fehlerinformationen vorhandene Fehlerinformationen über Fehler der Drehvorrichtung (11, 12) zu überprüfen.

14. Anordnung nach einem der Gegenstände 10 - 13, wobei die Anordnung eine Prognoseeinrichtung (25) aufweist, die ausgestaltet ist, aus den von den redundanten Oberflächeninformationen separierten Fehlerinformationen erwartete Fehlerwerte der Drehvorrichtung (11, 12) zu ermitteln, die jeweils für eine relative Arbeitsposition und Arbeitsausrichtung der Koordinaten-Messeinrichtung (209) oder eines Bearbeitungswerkzeuges einer Werkzeugmaschine zur Bearbeitung eines Werkstücks (13) einerseits und der Drehvorrichtung (11, 12) andererseits erwartet werden, und

wobei die Anordnung eine Ermittlungseinrichtung (25) aufweist, die ausgestaltet ist, aus den erwarteten Fehlerwerten der Drehvorrichtung (11, 12) zumindest eine Arbeitsposition und/oder Arbeitsausrichtung der Koordinaten-Messeinrichtung (209) oder des Bearbeitungswerkzeug zu ermitteln, für die der erwartete Fehlerwert der Drehvorrichtung (11, 12) bei einer vorgegebenen Mess-Aufgabe zur Bestimmung von Koordinaten eines Werkstücks (13) oder einer vorgegebenen Bearbeitungs-Aufgabe zur Bearbeitung eines Werkstücks (13)

  o kleiner ist als für andere Arbeitspositionen und/oder Arbeitsausrichtungen und/oder
  o eine vorgegebene Bedingung erfüllt.

15. Anordnung nach dem vorhergehenden Gegenstand, wobei die Steuerung (27) ausgestaltet ist, gemäß der ermittelten zumindest einen Arbeitsposition und/oder Arbeitsausrichtung eine Messung von Koordinaten eines zweiten Werkstücks oder eine Bearbeitung des zweiten Werkstücks zu steuern, wobei das zweite Werkstück und das erste Werkstück vom gleichen Typ sind.

16. Anordnung nach einem der Gegenstände 10 - 15, wobei die Steuerung (27) ausgestaltet ist, unter Berücksichtigung der von den redundanten Oberflächeninformationen separierten Fehlerinformationen und unter Verwendung der Koordinaten-Messeinrichtung (209) eine Messung von Koordinaten einer Oberfläche eines zweiten Werkstücks zu steuern, während die Koordinaten-Messeinrichtung (209) an der ersten Umfangsposition, an der zweiten Umfangsposition, an der optionalen weiteren Umfangsposition oder an einer der optionalen weiteren Umfangspositionen angeordnet ist.

17. Anordnung nach einem der Gegenstände 10 - 16, wobei die Anordnung eine zweite Drehvorrichtung (80) aufweist, deren Drehachse koaxial zu der Drehachse der Drehvorrichtung (84) verläuft, und wobei die Steuerung (27) ausgestaltet ist, die Koordinaten-Messeinrichtung (209) aus der ersten Umfangsposition in die zweite Umfangsposition zu bringen, indem sie die Drehvorrichtung (84), an der das erste Werkstück (13) angeordnet ist, durch Drehung der zweiten Drehvorrichtung (80) dreht, während die Koordinaten-Messeinrichtung (209) an ihrem Ort verbleibt.

18. Koordinatenmessgerät (211) mit einer Anordnung nach einem Gegenstände 10 - 17.

**Patentansprüche**

1.  Verfahren zum Reduzieren von Fehlern einer Drehvorrichtung (11, 12) bei der Bestimmung von Koordinaten eines Werkstücks (13), wobei die Drehvorrichtung (11, 12) eine Drehbewegung des Werkstücks (13) um eine Drehachse der Drehvorrichtung (11, 12) während der Bestimmung der Koordinaten ermöglicht, und wobei das Verfahren folgende Schritte aufweist:

    a) ein erstes Werkstück (13) wird an der Drehvorrichtung (11, 12) angeordnet,
    b) eine Koordinaten-Messeinrichtung (209) zur Messung von Koordinaten einer Oberfläche des ersten Werkstücks (13) wird an einer ersten Umfangsposition bezüglich der Umfangsrichtung der Drehachse positioniert,
    c) das erste Werkstück (13) wird von der Drehvorrichtung (11, 12) um die Drehachse gedreht, während von der an der ersten Umfangsposition positionierten Koordinaten-Messeinrichtung (209) ein erster Verlauf der Oberfläche des ersten Werkstücks (13), der aufgrund der Drehung des ersten Werkstücks (13) um die Drehachse herum verläuft, gemessen wird, sodass entsprechende erste Messsignale des ersten Verlaufs erzeugt werden,
    d) die Koordinaten-Messeinrichtung (209) wird an einer zweiten Umfangsposition bezüglich der Umfangsrichtung der Drehachse positioniert, die sich von der ersten Umfangsposition unterscheidet,
    e) das erste Werkstück (13) wird von der Drehvorrichtung (11, 12) um die Drehachse gedreht, während von der an der zweiten Umfangsposition positionierten Koordinaten-Messeinrichtung (209) ein zweiter Verlauf der Oberfläche des ersten Werkstücks (13), der aufgrund der Drehung des ersten Werkstücks (13) um die Drehachse herum verläuft, gemessen wird, sodass entsprechende zweite Messsignale des zweiten Verlaufs erzeugt werden,

f) optional werden die Schritte d) und e) zumindest ein weiteres Mal wiederholt, d.h. die Koordinaten-Messeinrichtung (209) wird an jeweils einer weiteren Umfangsposition bezüglich der Umfangsrichtung der Drehachse positioniert, die sich von der ersten Umfangsposition und der zweiten Umfangsposition sowie von anderen Umfangspositionen unterscheidet, an denen die Koordinaten-Messeinrichtung (209) bereits positioniert war und an dem die Koordinaten-Messeinrichtung (209) einen zugeordneter Verlauf der Oberfläche des ersten Werkstücks (13) bereits gemessen hat, und das Werkstück (13) wird von der Drehvorrichtung (11, 12) um die Drehachse gedreht, während von der an der weiteren Umfangsposition positionierten Koordinaten-Messeinrichtung (209) ein weiterer Verlauf der Oberfläche des ersten Werkstücks (13), der aufgrund der Drehung des ersten Werkstücks (13) um die Drehachse herum verläuft, gemessen wird, sodass entsprechende weitere Messsignale des weiteren Verlaufs erzeugt werden,

g) aus den ersten, aus den zweiten und aus den optionalen weiteren Messsignalen, die redundante Oberflächeninformationen über die um die Drehachse herum verlaufende Oberfläche des ersten Werkstücks (13) und Fehlerinformationen über Fehler der Drehvorrichtung (11, 12) aufgrund von Abweichungen zwischen tatsächlichen Positionen und tatsächlichen Ausrichtungen der Drehachse einerseits und entsprechenden idealen Positionen und idealen Ausrichtungen der Drehachse andererseits aufweisen, werden die redundanten Oberflächeninformationen und die Fehlerinformationen voneinander separiert,

h) unter Berücksichtigung der von den redundanten Oberflächeninformationen separierten Fehlerinformationen werden Koordinaten einer Oberfläche eines zweiten Werkstücks von der Koordinaten-Messeinrichtung (209) gemessen, während sich die Koordinaten-Messeinrichtung (209) an der gleichen Axialposition bezüglich der axialen Richtung der Drehachse befindet wie in den Schritten c) und e).

2. Verfahren nach Anspruch 1, wobei die Position und Ausrichtung des ersten Werkstücks (13) bezüglich der Drehvorrichtung (11, 12) in Schritt d) unverändert bleiben, sodass das erste Werkstück (13) in Schritt e) dieselbe Position und Ausrichtung bezüglich der Drehvorrichtung (11, 12) hat wie in Schritt c).

3. Verfahren nach Anspruch 1 oder 2, wobei die erste Umfangsposition, die zweite Umfangsposition und die optionale(n) weitere(n) Umfangsposition(en), an denen die Koordinaten-Messeinrichtung (209) bezüglich der Umfangsrichtung der Drehachse positioniert wird, an der gleichen Axialposition bezüglich der axialen Richtung der Drehachse liegen.

4. Verfahren nach einem der Ansprüche 1 bis 3, wobei aus den von den Fehlerinformationen separierten redundanten Oberflächeninformationen Koordinaten der um die Drehachse herum verlaufenden Oberfläche des ersten Werkstücks (13) bestimmt werden.

5. Verfahren nach einem Ansprüche 1 bis 4, wobei aus den von den redundanten Oberflächeninformationen separierten Fehlerinformationen erwartete Fehlerwerte der Drehvorrichtung (11, 12) ermittelt, die jeweils für eine relative Arbeitsposition und Arbeitsausrichtung der Koordinaten-Messeinrichtung (209) oder eines Bearbeitungswerkzeuges einer Werkzeugmaschine zur Bearbeitung eines Werkstücks (13) einerseits und der Drehvorrichtung (11, 12) andererseits erwartet werden, und wobei aus den erwarteten Fehlerwerten der Drehvorrichtung (11, 12) zumindest eine Arbeitsposition und/oder Arbeitsausrichtung der Koordinaten-Messeinrichtung (209) oder des Bearbeitungswerkzeug ermittelt wird, für die der erwartete Fehlerwert der Drehvorrichtung (11, 12) bei einer vorgegebenen Mess-Aufgabe zur Bestimmung von Koordinaten eines Werkstücks (13) oder einer vorgegebenen Bearbeitungs-Aufgabe zur Bearbeitung eines Werkstücks (13)

o kleiner ist als für andere Arbeitspositionen und/oder Arbeitsausrichtungen und/oder
o eine vorgegebene Bedingung erfüllt.

6. Verfahren nach Anspruch 5, wobei gemäß der ermittelten zumindest einen Arbeitsposition und/oder Arbeitsausrichtung eine Messung von Koordinaten eines zweiten Werkstücks oder eine Bearbeitung des zweiten Werkstücks gesteuert wird, wobei das zweite Werkstück und das erste Werkstück vom gleichen Typ sind.

7. Verfahren nach einem der Ansprüche 1 bis 6, wobei unter Berücksichtigung der von den redundanten Oberflächeninformationen separierten Fehlerinformationen Koordinaten einer Oberfläche eines zweiten Werkstücks von der Koordinaten-Messeinrichtung (209) gemessen werden, während die Koordinaten-Messeinrichtung (209) an der ersten Umfangsposition, an der zweiten Umfangsposition, an der optionalen weiteren Umfangsposition oder an einer der optionalen weiteren Umfangspositionen angeordnet ist.

8. Verfahren nach einem der Ansprüche 1 bis 7, wobei die Koordinaten-Messeinrichtung (209) aus der ersten Umfangsposition in die zweite Umfangsposition gebracht wird, indem die Drehvorrichtung (11, 12) von einer zweiten Drehvorrichtung, deren Drehachse koaxial zu der Drehachse der Drehvorrichtung (11, 12) verläuft, gedreht wird, während die Koordinaten-Messeinrichtung (209) an ihrem Ort verbleibt.

9. Anordnung zum Reduzieren von Fehlern einer Drehvorrichtung (11, 12) bei der Bestimmung von Koordinaten eines Werkstücks (13), wobei die Drehvorrichtung (11, 12) eine Drehbewegung des Werkstücks (13) um eine Drehachse der Drehvorrichtung (11, 12) während der Bestimmung der Koordinaten ermöglicht, und wobei die Anordnung Folgendes aufweist:

- die Drehvorrichtung (11, 12), welche ein erstes Teil (11) und eine relativ zu dem ersten Teil (11) drehbewegliches zweites Teil (12) aufweist, wobei ein erstes Werkstück (13) an dem ersten Teil (11) anordenbar ist, so dass es von der Drehvorrichtung (11, 12) um die Drehachse drehbar ist,
- eine Koordinaten-Messeinrichtung (209) zur Messung von Koordinaten einer Oberfläche des ersten Werkstücks (13),
- eine Steuerung (27), die ausgestaltet ist,

• durch Steuern der Koordinaten-Messeinrichtung (209), die an einer ersten Umfangsposition bezüglich der Umfangsrichtung der Drehachse positioniert ist, einen ersten Verlauf der Oberfläche des ersten Werkstücks (13) zu messen und entsprechende erste Messsignale zu erzeugen, wobei der erste Verlauf der Oberfläche aufgrund einer Drehung des ersten Werkstücks durch die Drehvorrichtung (11, 12) um die Drehachse herum verläuft,
• durch Steuern der Koordinaten-Messeinrichtung (209), die an einer zweiten Umfangsposition bezüglich der Umfangsrichtung der Drehachse positioniert ist, einen zweiten Verlauf der Oberfläche des ersten Werkstücks (13) zu messen und entsprechende zweite Messsignale zu erzeugen, wobei die zweite Umfangsposition von der ersten Umfangsposition verschieden ist und der zweite Verlauf der Oberfläche aufgrund einer Drehung des ersten Werkstücks durch die Drehvorrichtung (11, 12) um die Drehachse herum verläuft,
• optional durch Steuern der Koordinaten-Messeinrichtung (209), die bei zumindest einer weiteren optionalen Messung an einer weiteren Umfangsposition bezüglich der Umfangsrichtung der Drehachse positioniert ist, einen weiteren Verlauf der Oberfläche des ersten Werkstücks (13) zu messen und entsprechende weitere Messsignale zu erzeugen, wobei die weitere Umfangsposition von der ersten Umfangsposition und von der zweiten Umfangsposition sowie von optionalen anderen weiteren Umfangspositionen verschieden ist und der weitere Verlauf der Oberfläche aufgrund einer Drehung des ersten Werkstücks durch die Drehvorrichtung (11, 12) um die Drehachse herum verläuft,

- eine Separationseinrichtung (23), die ausgestaltet ist, aus den ersten, den zweiten und aus den optionalen weiteren Messsignalen, die redundante Oberflächeninformationen über die um die Drehachse herum verlaufende Oberfläche des ersten Werkstücks (13) und Fehlerinformationen über Fehler der Drehvorrichtung (11, 12) aufgrund von Abweichungen zwischen tatsächlichen Positionen und tatsächlichen Ausrichtungen der Drehachse einerseits und entsprechenden idealen Positionen und idealen Ausrichtungen der Drehachse andererseits aufweisen, die redundanten Oberflächeninformationen und die Fehlerinformationen voneinander zu separieren,

wobei die Steuerung ferner ausgestaltet ist, durch Steuern der Koordinaten-Messeinrichtung (209) unter Berücksichtigung der von den redundanten Oberflächeninformationen separierten Fehlerinformationen Koordinaten einer Oberfläche eines zweiten Werkstücks von der Koordinaten-Messeinrichtung (209) zu messen, während sich die Koordinaten-Messeinrichtung (209) an der gleichen Axialposition bezüglich der axialen Richtung der Drehachse befindet wie bei der Messung des ersten und zweiten Verlaufs der Oberfläche des ersten Werkstücks (13).

10. Anordnung nach Anspruch 9, wobei die erste Umfangsposition, die zweite Umfangsposition und die optionale(n) weitere(n) Umfangsposition(en), an denen die Koordinaten-Messeinrichtung (209) bezüglich der Umfangsrichtung der Drehachse positioniert wird, an der gleichen Axialposition bezüglich der axialen Richtung der Drehachse liegen.

11. Anordnung nach einem der Ansprüche 9 - 10, wobei die Anordnung eine Fehler-Überprüfungseinrichtung aufweist, die ausgestaltet ist, unter Verwendung der von den redundanten Oberflächeninformationen separierten Fehlerinformationen vorhandene Fehlerinformationen über Fehler der Drehvorrichtung (11, 12) zu überprüfen.

12. Anordnung nach einem der Ansprüche 9 - 11, wobei die Anordnung eine Prognoseeinrichtung (25) aufweist, die ausgestaltet ist, aus den von den redundanten Oberflächeninformationen separierten Fehlerinformationen erwartete Fehlerwerte der Drehvorrichtung (11, 12) zu ermitteln, die jeweils für eine relative Arbeitsposition und Arbeitsausrichtung der Koordinaten-Messeinrichtung (209) oder eines Bearbeitungswerkzeuges einer Werkzeugmaschine zur Bearbeitung eines Werkstücks (13) einerseits und der Drehvorrichtung (11, 12) andererseits erwartet werden, und wobei die Anordnung eine Ermittlungseinrichtung (25) aufweist, die ausgestaltet ist, aus den erwarteten Fehlerwerten der Drehvorrichtung (11, 12) zumindest eine Arbeitsposition und/oder Arbeitsausrichtung der Koordinaten-Messeinrichtung (209) oder des Bearbeitungswerkzeug zu ermitteln, für die der erwartete Fehlerwert der Drehvorrichtung (11, 12) bei einer vorgegebenen Mess-Aufgabe zur Bestimmung von Koordinaten eines Werkstücks (13) oder einer vorgegebenen Bearbeitungs-Aufgabe zur Bearbeitung eines Werkstücks (13)

- ◦ kleiner ist als für andere Arbeitspositionen und/oder Arbeitsausrichtungen und/oder
- ◦ eine vorgegebene Bedingung erfüllt.

13. Anordnung nach einem der Ansprüche 9 - 12, wobei die Steuerung (27) ausgestaltet ist, unter Berücksichtigung der von den redundanten Oberflächeninformationen separierten Fehlerinformationen und unter Verwendung der Koordinaten-Messeinrichtung (209) eine Messung von Koordinaten einer Oberfläche eines zweiten Werkstücks zu steuern, während die Koordinaten-Messeinrichtung (209) an der ersten Umfangsposition, an der zweiten Umfangsposition, an der optionalen weiteren Umfangsposition oder an einer der optionalen weiteren Umfangspositionen angeordnet ist.

14. Anordnung nach einem der Ansprüche 9 - 13, wobei die Anordnung eine zweite Drehvorrichtung (80) aufweist, deren Drehachse koaxial zu der Drehachse der Drehvorrichtung (84) verläuft, und wobei die Steuerung (27) ausgestaltet ist, die Koordinaten-Messeinrichtung (209) aus der ersten Umfangsposition in die zweite Umfangsposition zu bringen, indem sie die Drehvorrichtung (84), an der das erste Werkstück (13) angeordnet ist, durch Drehung der zweiten Drehvorrichtung (80) dreht, während die Koordinaten-Messeinrichtung (209) an ihrem Ort verbleibt.

15. Koordinatenmessgerät (211) mit einer Anordnung nach einem Ansprüche 9 - 14.

## Claims

1. Method for reducing errors of a rotary device (11, 12) when determining coordinates of a workpiece (13), wherein the rotary device (11, 12) enables a rotational movement of the workpiece (13) about an axis of rotation of the rotary device (11, 12) when determining the coordinates, and wherein the method comprises the following steps:

a) a first workpiece (13) is arranged at the rotary device (11, 12),
b) a coordinate measuring apparatus (209) for measuring coordinates of a surface of the first workpiece (13) is positioned at a first circumferential position with respect to the circumferential direction of the axis of rotation,
c) the first workpiece (13) is rotated about the axis of rotation by the rotary device (11, 12) while the coordinate measuring apparatus (209) positioned at the first circumferential position measures a first extent of the surface of the first workpiece (13) which extends around the axis of rotation due to the rotation of the first workpiece (13) such that corresponding first measurement signals of the first extent are generated,
d) the coordinate measuring apparatus (209) is positioned at a second circumferential position with respect to the circumferential direction of the axis of rotation which differs from the first circumferential position,
e) the first workpiece (13) is rotated about the axis of rotation by the rotary device (11, 12) while the coordinate measuring apparatus (209) positioned at the second circumferential position measures a second extent of the surface of the first workpiece (13) which extends around the axis of rotation due to the rotation of the first workpiece (13) such that corresponding second measurement signals of the second extent are generated,
f) steps d) and e) are optionally repeated at least one further time, i.e. the coordinate measuring apparatus (209) is respectively positioned at a further circumferential position with respect to the circumferential direction of the axis of rotation which differs from the first circumferential position and the second circumferential position and from other circumferential positions, at which the coordinate measuring apparatus (209) was already positioned and at which the coordinate measuring apparatus (209) has already measured an associated extent of the surface of the first workpiece (13), and the workpiece (13) is rotated about the axis of rotation by the rotary device (11, 12) while the coordinate measuring apparatus (209) positioned at the further circumferential position measures a further extent of the surface of the first workpiece (13) which extends around the axis of rotation due to the rotation of the first workpiece (13) such that corresponding further measurement signals of the further extent are generated,

g) the redundant surface information and the error information are separated from one another from the first, from the second and from the optional further measurement signals, which have redundant surface information about the surface of the first workpiece (13) extending around the axis of rotation and error information about errors of the rotary device (11) due to deviations between, firstly, actual positions and actual alignments of the axis of rotation and, secondly, corresponding ideal positions and ideal alignments of the axis of rotation,

h) coordinates of a surface of a second workpiece are measured by the coordinate measuring apparatus (209) taking into account the error information separated from the redundant surface information, while the coordinate measuring apparatus (209) is situated at the same axial position with respect to the axial direction of the axis of rotation as in steps c) and e).

2.  Method according to Claim 1, wherein the position and alignment of the first workpiece (13) with respect to the rotary device (11, 12) remain unchanged in step d) such that the first workpiece (13) has the same position and alignment with respect to the rotary device (11, 12) in step e) as it does in step c) .

3.  Method according to Claim 1 or 2, wherein the first circumferential position, the second circumferential position and the optional further circumferential position(s), at which the coordinate measuring apparatus (209) is positioned with respect to the circumferential direction of the axis of rotation, lie at the same axial position with respect to the axial direction of the axis of rotation.

4.  Method according to one of Claims 1 to 3, wherein coordinates of the surface of the first workpiece (13) extending about the axis of rotation are determined from the redundant surface information that was separated from the error information.

5.  Method according to one of Claims 1 to 4, wherein expected error values of the rotary device (11, 12) are established from the error information separated from the redundant surface information, which expected error values are expected in each case for a relative work position and work alignment of the coordinate measuring apparatus (209) or of a machining tool of a machine tool for machining a workpiece (13) on the one hand and of the rotary device (11, 12) on the other hand, and wherein at least one work position and/or work alignment of the coordinate measuring apparatus (209) or of the machining tool is established from the expected error values of the rotary device (11, 12), for which work position and/or work alignment, in the case of a predetermined measurement task for determining coordinates of a workpiece (13) or a predetermined machining task for machining a workpiece (13), the expected error value of the rotary device (11, 12)

    o is smaller than for other work positions and/or work alignments and/or
    o satisfies a predetermined condition.

6.  Method according to Claim 5, wherein a measurement of coordinates of a second workpiece or a machining of the second workpiece is controlled in accordance with the established at least one work position and/or work alignment, wherein the second workpiece and the first workpiece are of the same type.

7.  Method according to one of Claims 1 to 6, wherein coordinates of a surface of a second workpiece are measured by the coordinate measuring apparatus (209), taking into account the error information separated from the redundant surface information, while the coordinate measuring apparatus (209) is arranged at the first circumferential position, at the second circumferential position, at the optional further circumferential position or at one of the optional further circumferential positions.

8.  Method according to one of Claims 1 to 7, wherein the coordinate measuring apparatus (209) is brought into the second circumferential position from the first circumferential position by virtue of the rotary device (11, 12) being rotated by a second rotary device, the axis of rotation of which extends coaxially with the axis of rotation of the rotary device (11, 12), while the coordinate measuring apparatus (209) remains at the location thereof.

9.  Arrangement for reducing errors of a rotary device (11, 12) when determining coordinates of a workpiece (13), wherein the rotary device (11, 12) enables a rotational movement of the workpiece (13) about an axis of rotation of the rotary device (11, 12) when determining the coordinates, and wherein the arrangement comprises the following:

    - the rotary device (11, 12), which has a first part (11) and a second part (12) with rotational mobility relative to the first part (11), wherein a first workpiece (13) is arrangeable at the first part (11) such that it is rotatable about the axis of rotation by way of the rotary device (11, 12),

- a coordinate measuring apparatus (209) for measuring coordinates of a surface of the first workpiece (13),
- a controller (27), configured to

• measure a first extent of the surface of the first workpiece (13) by controlling the coordinate measuring apparatus (209), which is positioned at a first circumferential position with respect to the circumferential direction of the axis of rotation, and generate corresponding first measurement signals, wherein the first extent of the surface extends about the axis of rotation due to a rotation of the first workpiece by way of the rotary device (11, 12),

• measure a second extent of the surface of the first workpiece (13) by controlling the coordinate measuring apparatus (209), which is positioned at a second circumferential position with respect to the circumferential direction of the axis of rotation, and generate corresponding second measurement signals, wherein the second circumferential position differs from the first circumferential position and the second extent of the surface extends about the axis of rotation due to a rotation of the first workpiece by way of the rotary device (11, 12),

• optionally measure a further extent of the surface of the first workpiece (13) by controlling the coordinate measuring apparatus (209), which is positioned at a further circumferential position with respect to the circumferential direction of the axis of rotation during at least one further optional measurement, and generate corresponding further measurement signals, wherein the further circumferential position differs from the first circumferential position and from the second circumferential position and from optional other further circumferential positions, and the further extent of the surface extends about the axis of rotation due to a rotation of the first workpiece by way of the rotary device (11, 12),

- a separation apparatus (23), configured to separate the redundant surface information and the error information from one another from the first, from the second and from the optional further measurement signals, which have redundant surface information about the surface of the first workpiece (13) extending around the axis of rotation and error information about errors of the rotary device (11, 12) due to deviations between, firstly, actual positions and actual alignments of the axis of rotation and, secondly, corresponding ideal positions and ideal alignments of the axis of rotation, wherein the controller is furthermore configured to measure coordinates of a surface of a second workpiece by the coordinate measuring apparatus (209) by controlling the coordinate measuring apparatus (209), taking into account the error information separated from the redundant surface information, while the coordinate measuring apparatus (209) is situated at the same axial position with respect to the axial direction of the axis of rotation as when measuring the first and second extents of the surface of the first workpiece (13).

10. Arrangement according to Claim 9, wherein the first circumferential position, the second circumferential position and the optional further circumferential position(s), at which the coordinate measuring apparatus (209) is positioned with respect to the circumferential direction of the axis of rotation, lie at the same axial position with respect to the axial direction of the axis of rotation.

11. Arrangement according to one of Claims 9-10, wherein the arrangement has an error checking apparatus, configured to check available error information about errors of the rotary device (11, 12) using the error information separated from the redundant surface information.

12. Arrangement according to one of Claims 9-11, wherein the arrangement has a prediction apparatus (25), configured to establish expected error values of the rotary device (11, 12) from the error information separated from the redundant surface information, which error values are expected in each case for a relative work position and work alignment of the coordinate measuring apparatus (209) or of a machining tool of a machine tool for machining a workpiece (13) on the one hand and the rotary device (11, 12) on the other hand, and wherein the arrangement has an establishment apparatus (25), configured to establish at least one work position and/or work alignment of the coordinate measuring apparatus (209) or of the machining tool from the expected error values of the rotary device (11, 12), for which the expected error value of the rotary device (11, 12) in the case of a predetermined measurement task for determining coordinates of a workpiece (13) or a predetermined machining task for machining a workpiece (13)

∘ is smaller than for other work positions and/or work alignments and/or
∘ satisfies a predetermined condition.

13. Arrangement according to one of Claims 9-12, wherein the controller (27) is configured to control a measurement of coordinates of a surface of a second workpiece, taking into account the error information separated from the redundant surface information and using the coordinate measuring apparatus (209), while the coordinate measuring apparatus (209) is arranged at the first circumferential position, at the second circumferential position, at the optional further circumferential position or at one of the optional further circumferential positions.

14. Arrangement according to one of Claims 9-13, wherein the arrangement has a second rotary device (80), the axis of rotation of which extends coaxially with respect to the axis of rotation of the rotary device (84), and wherein the controller (27) is configured to bring the coordinate measuring apparatus (209) from the first circumferential position into the second circumferential position by virtue of it rotating the rotary device (84) at which the first workpiece (13) is arranged by rotating the second rotary device (80), while the coordinate measuring apparatus (209) remains at the location thereof.

15. Coordinate measuring machine (211) with an arrangement according to one of Claims 9-14.

**Revendications**

1. Procédé de réduction d'erreurs d'un dispositif rotatif (11, 12) lors de la détermination de coordonnées d'une pièce usinée (13), le dispositif rotatif (11, 12) permettant un mouvement de rotation de la pièce usinée (13) autour d'un axe de rotation du dispositif rotatif (11, 12) pendant la détermination des coordonnées, et le procédé comprenant les étapes suivantes :

   a) une première pièce usinée (13) est montée sur le dispositif rotatif (11, 12),
   b) un appareil de mesure de coordonnées (209), destiné à mesurer les coordonnées d'une surface de la première pièce usinée (13), est positionné au niveau d'une première position circonférentielle par rapport à la direction circonférentielle de l'axe de rotation,
   c) la première pièce usinée (13) est mise en rotation autour de l'axe de rotation par le dispositif rotatif (11, 12), pendant qu'un premier tracé de la surface de la première pièce usinée (13), lequel s'étend autour de l'axe de rotation du fait de la rotation de la première pièce usinée (13), est mesuré par l'appareil de mesure de coordonnées (209) positionné au niveau de la première position circonférentielle, de sorte que des premiers signaux de mesure correspondants du premier tracé sont générés,
   d) l'appareil de mesure de coordonnées (209) est positionné au niveau d'une deuxième position circonférentielle par rapport à la direction circonférentielle de l'axe de rotation, laquelle est différente de la première position circonférentielle,
   e) la première pièce usinée (13) est mise en rotation autour de l'axe de rotation par le dispositif rotatif (11, 12), pendant qu'un deuxième tracé de la surface de la première pièce usinée (13), lequel s'étend autour de l'axe de rotation du fait de la rotation de la première pièce usinée (13), est mesuré par l'appareil de mesure de coordonnées (209) positionné au niveau de la deuxième position circonférentielle, de sorte que des deuxièmes signaux de mesure correspondants du deuxième tracé sont générés,
   f) les étapes d) et e) sont facultativement répétées au moins une fois de plus, ce qui veut dire que l'appareil de mesure de coordonnées (209) est positionné respectivement au niveau d'une position circonférentielle supplémentaire par rapport à la direction circonférentielle de l'axe de rotation, laquelle est différente de la première position circonférentielle et de la deuxième position circonférentielle ainsi que d'autres positions circonférentielles auxquelles l'appareil de mesure de coordonnées (209) était déjà positionné et auxquelles l'appareil de mesure de coordonnées (209) a déjà mesuré un tracé associé de la surface de la première pièce usinée (13), et la pièce usinée (13) est mise en rotation autour de l'axe de rotation par le dispositif rotatif (11, 12), pendant qu'un tracé supplémentaire de la surface de la première pièce usinée (13), lequel s'étend autour de l'axe de rotation du fait de la rotation de la première pièce usinée (13), est mesuré par l'appareil de mesure de coordonnées (209) positionné au niveau de la position circonférentielle supplémentaire, de sorte que des signaux de mesure supplémentaires correspondants du tracé supplémentaire sont générés,
   g) les informations de surface redondantes et les informations d'erreur, issues des premiers, des deuxièmes signaux de mesure et des signaux de mesure supplémentaires facultatifs, lesquels possèdent des informations de surface redondantes à propos de la surface de la première pièce usinée (13) qui s'étend autour de l'axe de rotation, ainsi que des informations d'erreur relatives à des erreurs du dispositif rotatif (11, 12) en raison d'écarts entre les positions réelles et les orientations réelles de l'axe de rotation d'une part et les positions idéales et orientations idéales correspondantes de l'axe de rotation d'autre part, sont séparées mutuellement,
   h) les cordonnées d'une surface d'une deuxième pièce usinée sont mesurées par l'appareil de mesure de coordonnées (209) en tenant compte des informations d'erreur séparées des informations de surface redondantes, pendant que l'appareil de mesure de coordonnées (209) se trouve à la même position axiale par rapport à la direction axiale de l'axe de rotation qu'aux étapes c) et e).

2. Procédé selon la revendication 1, la position et l'orientation de la première pièce usinée (13) par rapport au dispositif rotatif (11, 12) à l'étape d) restant inchangées, de sorte que la première pièce usinée (13) possède à l'étape e) les mêmes position et orientation par rapport au dispositif rotatif (11, 12) qu'à l'étape c).

3. Procédé selon la revendication 1 ou 2, la première position circonférentielle, la deuxième position circonférentielle et la/les position(s) circonférentielle(s) supplémentaire(s) facultative(s) auxquelles l'appareil de mesure de coordonnées (209) est positionné par rapport à la direction circonférentielle de l'axe de rotation se trouvant à la même position axiale par rapport à la direction axiale de l'axe de rotation.

4. Procédé selon l'une des revendications 1 à 3, les coordonnées de la surface de la première pièce usinée (13) qui s'étend autour de l'axe de rotation étant déterminées à partir des informations de surface redondantes séparées des informations d'erreur.

5. Procédé selon l'une des revendications 1 à 4, les valeurs d'erreur attendues du dispositif rotatif (11, 12) étant déterminées à partir des informations d'erreur séparées des informations de surface redondantes, lesquelles sont respectivement attendues pour une position de travail et une orientation de travail relatives de l'appareil de mesure de coordonnées (209) ou d'un outil d'usinage d'une machine-outil destinée à usiner une pièce usinée (13) d'une part et le dispositif rotatif (11, 12) d'autre part, et au moins une position de travail et/ou une orientation de travail de l'appareil de mesure de coordonnées (209) ou de l'outil d'usinage étant déterminées à partir des valeurs d'erreur attendues du dispositif rotatif (11, 12), pour lesquelles la valeur d'erreur attendue du dispositif rotatif (11, 12), avec une tâche de mesure prédéfinie destinée à déterminer les coordonnées d'une pièce usinée (13) ou une tâche d'usinage prédéfinie destinée à usiner une pièce usinée (13),

* est inférieure à celle pour les autres positions de travail et/ou orientations de travail et/ou
* remplit une condition prédéfinie.

6. Procédé selon la revendication 5, une mesure de coordonnées d'une deuxième pièce usinée ou un usinage de la deuxième pièce usinée étant commandé conformément à l'au moins une position de travail et/ou orientation de travail déterminées, la deuxième pièce usinée et la première pièce usinée étant du même type.

7. Procédé selon l'une des revendications 1 à 6, les coordonnées d'une surface d'une deuxième pièce usinée étant mesurées par l'appareil de mesure de coordonnées (209) en tenant compte des informations d'erreur séparées des informations de surface redondantes, pendant que l'appareil de mesure de coordonnées (209) est disposé à la première position circonférentielle, à la deuxième position circonférentielle, à la position circonférentielle supplémentaire facultative ou à l'une des positions circonférentielles supplémentaires facultatives.

8. Procédé selon l'une des revendications 1 à 7, l'appareil de mesure de coordonnées (209) étant amené de la première position circonférentielle à la deuxième position circonférentielle en ce que le dispositif rotatif (11, 12) est tourné par un deuxième dispositif rotatif dont l'axe de rotation s'étend de manière coaxiale par rapport à l'axe de rotation du dispositif rotatif (11, 12), pendant que l'appareil de mesure de coordonnées (209) reste à sa place.

9. Arrangement de réduction des erreurs d'un dispositif rotatif (11, 12) lors de la détermination des coordonnées d'une pièce usinée (13), le dispositif rotatif (11, 12) permettant un mouvement de rotation de la pièce usinée (13) autour d'un axe de rotation du dispositif rotatif (11, 12) pendant la détermination des coordonnées, et l'arrangement comprenant ce qui suit :

- le dispositif rotatif (11, 12), qui possède une première partie (11) et une deuxième partie (12) à mobilité de rotation par rapport à la première partie (11), une première pièce usinée (13) pouvant être montée sur la première partie (11) de sorte qu'elle puisse être mise en rotation autour de l'axe de rotation par le dispositif rotatif (11, 12),
- un appareil de mesure de coordonnées (209) destiné à mesurer les coordonnées d'une surface de la première pièce usinée (13),
- une commande (27) qui est configurée pour

* en commandant l'appareil de mesure de coordonnées (209), qui est positionné au niveau d'une première position circonférentielle par rapport à la direction circonférentielle de l'axe de rotation, mesurer un premier tracé de la surface de la première pièce usinée (13) et générer des premiers signaux de mesure correspondants, le premier tracé de la surface s'étendant autour de l'axe de rotation du fait d'une mise en rotation de la première pièce usinée par le dispositif rotatif (11, 12),

* en commandant l'appareil de mesure de coordonnées (209), qui est positionné au niveau d'une deuxième position circonférentielle par rapport à la direction circonférentielle de l'axe de rotation, mesurer un deuxième tracé de la surface de la première pièce usinée (13) et générer des deuxièmes signaux de mesure correspondants, la deuxième position circonférentielle étant différente de la première position circonférentielle et le deuxième tracé de la surface s'étendant autour de l'axe de rotation du fait d'une mise en rotation de la première pièce usinée par le dispositif rotatif (11, 12),

* facultativement, en commandant l'appareil de mesure de coordonnées (209) qui, lors d'au moins une mesure facultative supplémentaire, est positionné au niveau d'une position circonférentielle supplémentaire par rapport à la direction circonférentielle de l'axe de rotation, mesurer un tracé supplémentaire de la surface de la première pièce usinée (13) et générer des signaux de mesure supplémentaires correspondants, la position circonférentielle supplémentaire étant différente de la première position circonférentielle et de la deuxième position circonférentielle ainsi que des autres positions circonférentielles supplémentaires facultatives et le tracé supplémentaire de la surface s'étendant autour de l'axe de rotation du fait d'une mise en rotation de la première pièce usinée par le dispositif rotatif (11, 12),

- un appareil de séparation (23) qui est configuré pour séparer mutuellement les informations de surface redondantes et les informations d'erreur, issues des premiers et des deuxièmes signaux de mesure ainsi que des signaux de mesure supplémentaires facultatifs, lesquels possèdent des informations de surface redondantes à propos de la surface de la première pièce usinée (13) qui s'étend autour de l'axe de rotation, ainsi que des informations d'erreur relatives à des erreurs du dispositif rotatif (11, 12) en raison d'écarts entre les positions réelles et les orientations réelles de l'axe de rotation d'une part et les positions idéales et orientations idéales correspondantes de l'axe de rotation d'autre part, sont séparées mutuellement,

la commande étant en outre configurée pour, en commandant l'appareil de mesure de coordonnées (209), mesurer les cordonnées d'une surface d'une deuxième pièce usinée par l'appareil de mesure de coordonnées (209) en tenant compte des informations d'erreur séparées des informations de surface redondantes, pendant que l'appareil de mesure de coordonnées (209) se trouve à la même position axiale par rapport à la direction axiale de l'axe de rotation que lors de la mesure du premier et du deuxième tracés de la surface de la première pièce usinée (13).

10. Arrangement selon la revendication 9, la première position circonférentielle, la deuxième position circonférentielle et la/les position(s) circonférentielle(s) supplémentaire(s) facultative(s) auxquelles l'appareil de mesure de coordonnées (209) est positionné par rapport à la direction circonférentielle de l'axe de rotation se trouvant à la même position axiale par rapport à la direction axiale de l'axe de rotation.

11. Arrangement selon l'une des revendications 9 à 10, l'arrangement possédant un appareil de contrôle d'erreur qui est configuré pour vérifier la présence d'informations d'erreur à propos d'erreurs du dispositif rotatif (11, 12) en utilisant les informations d'erreur séparées des informations de surface redondantes.

12. Arrangement selon l'une des revendications 9 à 11, l'arrangement possédant un appareil de pronostic (25) qui est configuré pour déterminer des valeurs d'erreur attendues du dispositif rotatif (11, 12) à partir des informations d'erreur séparées des informations de surface redondantes, lesquelles sont respectivement attendues pour une position de travail et une orientation de travail relatives de l'appareil de mesure de coordonnées (209) ou d'un outil d'usinage d'une machine-outil destinée à usiner une pièce usinée (13) d'une part et le dispositif rotatif (11, 12) d'autre part, et l'arrangement possédant un appareil de détermination (25) qui est configuré pour déterminer au moins une position de travail et/ou une orientation de travail de l'appareil de mesure de coordonnées (209) ou de l'outil d'usinage à partir des valeurs d'erreur attendues du dispositif rotatif (11, 12), pour lesquelles la valeur d'erreur attendue du dispositif rotatif (11, 12), avec une tâche de mesure prédéfinie destinée à déterminer des coordonnées d'une pièce usinée (13) ou une tâche d'usinage prédéfinie destinée à usiner une pièce usinée (13),

* est inférieure à celle pour les autres positions de travail et/ou orientations de travail et/ou
* remplit une condition prédéfinie.

13. Arrangement selon l'une des revendications 9 à 12, la commande (27) étant configurée pour commander une mesure des coordonnées d'une surface d'une deuxième pièce usinée en tenant compte des informations d'erreur séparées des informations de surface redondantes et en utilisant l'appareil de mesure de coordonnées (209), pendant que l'appareil de mesure de coordonnées (209) est disposé à la première position circonférentielle, à la deuxième position circonférentielle, à la position circonférentielle supplémentaire facultative ou à l'une des positions circonférentielles supplémentaires facultatives.

14. Arrangement selon l'une des revendications 9 à 13, l'arrangement possédant un deuxième dispositif rotatif (80) dont l'axe de rotation s'étend de manière coaxiale par rapport à l'axe de rotation du dispositif rotatif (84), et la commande (27) étant configurée pour amener l'appareil de mesure de coordonnées (209) de la première position circonférentielle à la deuxième position circonférentielle en ce qu'elle tourne le dispositif rotatif (84), sur lequel est montée la pièce usinée (13), en faisant tourner le deuxième dispositif rotatif (80), pendant que l'appareil de mesure de coordonnées (209) reste à sa place.

15. Appareil de mesure de coordonnées (211) équipé d'un arrangement selon l'une des revendications 9 à 14.

Fig.1

Fig.2

Fig.3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **ERIC MARSH.** *Precision Spindle Metrology,* ISBN 978-1-932078-77-0
- **E. R. MARSH et al.** *A comparison of reversal and multiprobe error separation,* 25. Marz 2009, vol. 34 (1), ISSN 0141-6359, 85-91
- Nanometer-level axis of rotation metrology for a high-precision macromolecular X-ray diffractometer. **B. KNAPP et al.** Journal of Physics: Converence Series. Institute of Physics Publishing, 22. Marz 2013, vol. 425, 12012